# EUROPEAN PATENT APPLICATION

(11) **EP 4 506 069 A1**
(43) Date of publication of application: **12.02.2025**
(21) Application number: 23784785.0
(22) Date of filing: 05.04.2023
(51) Int. Cl.: B06B 1/04, F16H 25/22, G01M 7/02, H02K 7/06, H02K 7/065, H02K 7/075, H02K 7/116, H02P 5/74, H02P 27/06

(54) **TEST DEVICE, HEDGE TRIMMER, AND ELECTRIC ACTUATOR**

(30) Priority: 08.04.2022 JP 2022064829; 08.04.2022 JP 2022064830; 07.07.2022 JP 2022109889; 24.08.2022 JP 2022133622
(71) Applicant: Kokusai Keisokuki Kabushiki Kaisha, Tama-shi, Tokyo 206-0025 (JP)
(72) Inventor: MATSUMOTO, Sigeru, Tama-shi, Tokyo 206-0025 (JP); MATSUMOTO, Shinichi, Tama-shi, Tokyo 206-0025 (JP); MURAUCHI, Kazuhiro, Tama-shi, Tokyo 206-0025 (JP); MIYASHITA, Hiroshi, Tama-shi, Tokyo 206-0025 (JP); SUZUKI, Masami, Tama-shi, Tokyo 206-0025 (JP)
(74) Representative: Lewis Silkin LLP
(86) International application number: PCT/JP2023/014153
(87) International publication number: WO 2023/195501

(57) **Abstract**

The present invention improves power-saving performance of devices including an electric actuator.

The vibration test device according to one embodiment of the present invention includes a vibrating table on which an object to be vibrated is to be attached, an electric actuator that vibrates the vibrating table in a predetermined direction, and a controller that controls the electric actuator. The electric actuator includes an electric motor of which rotation can be switched between forward and reverse rotations, and a drive device that is supplied with electric power from a power source and controlled by the controller to supply driving electric power for vibrating the vibrating table at desired amplitude and frequency to the electric motor. The drive device includes a power regenerative converter that regenerates electric power that is not consumed by acceleration of the electric motor, among electric power regenerated from the electric motor when the vibrating table is vibrated at the desired amplitude and frequency, to the power source.

## Description

### TECHNICAL FIELD

The present invention relates to test devices, hedge trimmers, and electric actuators.

### BACKGROUND ART

In general, mechanical products and mechanical parts are subjected to repetitive loads during transportation and use. Objects subjected to repetitive loads may break due to fatigue or may change in shape or characteristics. Therefore, when developing mechanical products and mechanical parts, it is desirable to apply repetitive loads to samples (test pieces) and observe their behavior.

For this purpose, vibration test devices are used. Conventionally, vibration test devices with hydraulic actuators have been used. However, hydraulic vibration test devices have problems caused by hydraulic actuators (e.g., low energy efficiency, need to install large-scale hydraulic supply equipment such as oil tanks and hydraulic piping, need to periodically change a large amount of hydraulic oil, work environment and soil contamination due to hydraulic oil leakage, etc.), and improvements have been desired. Recently, vibration test devices that employ servomotors instead of hydraulic actuators have been proposed (see, for example, Patent Document 1).

### PRIOR ART DOCUMENT

### PATENT DOCUMENT

[Patent Document 1] International Publication No. 2009/011433

### SUMMARY OF THE INVENTION

### PROBLEM TO BE SOLVED BY THE INVENTION

Although servomotor vibration test devices can reduce electric power consumption compared to hydraulic vibration test devices, there is still room for improvement in electric power consumption when switching rotation direction of the servomotors in a short cycle as described in Patent Document 1. Such problems can occur not only in vibration test devices but also in various other devices in which electric motors are driven to repeatedly rotate back and forth.

The present invention has been made in view of the above circumstances, and the object of the present invention is to improve power-saving performance of devices equipped with electric motors.

### MEANS FOR SOLVING THE PROBLEM

According to an aspect of the invention, there is provided a vibration test device including a vibrating table on which an object to be vibrated is to be attached, an electric actuator that vibrates the vibrating table in a predetermined direction, and a controller that controls the electric actuator. The electric actuator includes an electric motor of which rotation can be switched between forward and reverse rotations, and a drive device that is supplied with electric power from a power source and controlled by the controller to supply drive power for vibrating the vibrating table at desired amplitude and frequency to the electric motor. The drive device includes a power regenerative converter that regenerates electric power that is not consumed by acceleration of the electric motor, among electric power regenerated from the electric motor when the vibrating table is vibrated at the desired amplitude and frequency, to the power source.

### EFFECT OF THE INVENTION

According to an embodiment of the invention, it is possible to improve power-saving performance of devices equipped with electric motors.

### BRIEF DESCRIPTION OF THE DRAWINGS

[FIG. 1] FIG. 1 is a plan view of a vibration test device according to a first embodiment of the present invention.
[FIG. 2] FIG. 2 is a side view of a first actuator of the first embodiment.
[FIG. 3] FIG. 3 is a plan view of the first actuator of the first embodiment.
[FIG. 4] FIG. 4 is a side view of a table and a third actuator of the first embodiment.
[FIG. 5] FIG. 5 is a side view of the table and the third actuator of the first embodiment.
[FIG. 6] FIG. 6 is a block diagram showing a schematic configuration of a control system of the first embodiment.
[FIG. 7] FIG. 7 is a block diagram showing a schematic configuration of an electric power feeding system of the first embodiment.
[FIG. 8] FIG. 8 is a diagram showing a circuit configuration of the electric power feeding system of the first embodiment.
[FIG. 9] (a) is a drive waveform for one cycle of a servomotor of the first embodiment of the present invention, (b) is a graph showing a rotation speed [rpm] of the servomotor in the first half of one cycle of the servomotor, (c) is a graph showing the rotation speed of the servomotor in the second half of one cycle of the servomotor, (d) is a graph showing torque [Nm] of the servomotor in the first half of one cycle of the servomotor, and (e) is a graph showing the torque of the servomotor in the second half of one cycle of the servomotor.
[FIG. 10] FIG. 10 is a diagram contrasting operation of the motor of the first embodiment of the present invention with operation of a conventional motor.
[FIG. 11] FIG. 11 is an external view of a tire test device according to a second embodiment of the present invention.
[FIG. 12] FIG. 12 is an external view of the tire test device according to the second embodiment of the present invention.
[FIG. 13] FIG. 13 is a diagram showing an internal configuration of a torque generator of the second embodiment.
[FIG. 14] FIG. 14 is a block diagram showing a schematic configuration of an electric power feeding system of the second embodiment.
[FIG. 15] FIG. 15 is a side view of a torsion test device according to a third embodiment of the present invention.
[FIG. 16] FIG. 16 is a side view of a first drive section of the third embodiment.
[FIG. 17] FIG. 17 is a block diagram showing a schematic configuration of an electric power feeding system of the third embodiment.
[FIG. 18] FIG. 18 is a side view of a tensile and compression test device of a fourth embodiment of the present invention.
[FIG. 19] FIG. 19 is a front view of the tensile and compression test device of the fourth embodiment.
[FIG. 20] FIG. 20 is a block diagram showing a schematic configuration of an electric power feeding system of the fourth embodiment.
[FIG. 21] FIG. 21 is a perspective view of a collision simulation test device according to a fifth embodiment of the present invention.
[FIG. 22] FIG. 22 is a perspective view showing structures of a test section and a belt mechanism of the collision simulation test device according to the fifth embodiment.
[FIG. 23] FIG. 23 is a perspective view of an electric actuator according to the fifth embodiment.
[FIG. 24] FIG. 24 is a plan view showing a schematic structure of the electric actuator according to the fifth embodiment.
[FIG. 25] FIG. 25 is a side view of a connecting rod of the fifth embodiment.
[FIG. 26] FIG. 26 is a side view of a crankshaft of the fifth embodiment.
[FIG. 27] FIG. 27 is a side view showing a basic configuration of a uniformity and dynamic balance multi-test device according to a sixth embodiment of the present invention.
[FIG. 28] FIG. 28 is a diagram schematically showing a method for driving a spindle to rotate in the sixth embodiment.
[FIG. 29] FIG. 29 is a front view of a measurement section of a balance measurement device according to a seventh embodiment of the present invention.
[FIG. 30] FIG. 30 is a side view of the measurement section of the balance measurement device according to the seventh embodiment.
[FIG. 31] FIG. 31 is a perspective view of a hedge trimmer according to an eighth embodiment of the present invention.
[FIG. 32] FIG. 32 is a side view of the hedge trimmer according to the eighth embodiment.
[FIG. 33] FIG. 33 is a plan view of the hedge trimmer according to the eighth embodiment.
[FIG. 34] FIG. 34 is a block diagram showing a schematic configuration of an electric power feeding system for an electric actuator according to a ninth embodiment.
[FIG. 35] FIG. 35 is a block diagram showing a schematic configuration of an electric power feeding system for an electric actuator according to a tenth embodiment of the present invention.
[FIG. 36] FIG. 36 is a block diagram showing a schematic configuration of an electric power feeding system for an electric actuator according to an eleventh embodiment of the present invention.
[FIG. 37] FIG. 37 is a side view of a hedge trimmer according to a twelfth embodiment of the present invention.
[FIG. 38] FIG. 38 is a plan view of the hedge trimmer according to the twelfth embodiment.
[FIG. 39] FIG. 39 is a block diagram showing a modified example of the schematic configuration of the electric power feeding system for the electric actuator.
[FIG. 40] FIG. 40 is a block diagram showing another modified example of the schematic configuration of the electric power feeding system for the electric actuator.

### EMBODIMENTS FOR CARRYING OUT THE INVENTION

Embodiments of the present invention will be described below with reference to the drawings. In the following description, identical or corresponding components will be marked with identical or corresponding reference numerals, and redundant explanations will be omitted. In addition, in each figure, when multiple items with a common reference numeral are indicated, the reference numeral is not necessarily marked to all of those multiple items and the indication of the reference numeral to some of those multiple items is omitted as appropriate.

### (First embodiment)

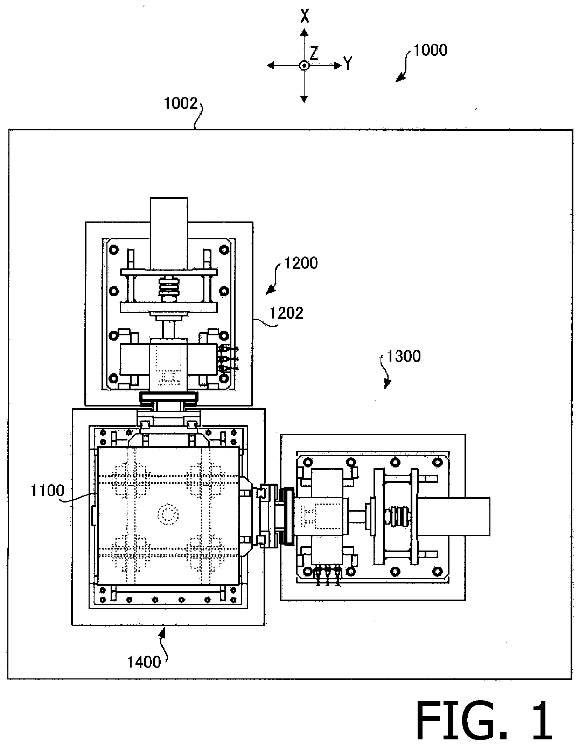

FIG. 1 is a plan view of a vibration test device (oscillating device) 1000 according to a first embodiment of the present invention. The vibration test device 1000 of the present embodiment is a power-saving electric motor system that includes a plurality of electric motors as prime movers and that can operate with less electric power consumption than before, and is a power-saving test system that includes the power-saving electric motor system. In the vibration test device 1000, a workpiece, which is an object to be subjected to vibration test, is fixed on a table 1100, and the table 1100 and the workpiece on the table 1100 can be vibrated in three orthogonal axial directions using first, second, and third actuators 1200, 1300, and 1400. The workpiece is the object to be vibrated, and the table 1100 is an example of a vibrating table to which the object to be vibrated is attached. In the following description, a direction in which the first actuator 1200 vibrates the table 1100 (vertical direction in FIG. 1) is defined as an X-axis direction, a direction in which the second actuator 1300 vibrates the table 1100 (lateral direction in FIG. 1) is defined as a Y-axis direction, and a direction in which the third actuator 1400 vibrates the table, that is, a vertical direction (a direction perpendicular to the surface of the paper in FIG. 1), is defined as a Z-axis direction. The X-axis and Y-axis directions are horizontal directions that are orthogonal to each other.

Each of the first actuator 1200, the second actuator 1300, and the third actuator 1400 is an electric actuator that vibrates the vibrating table 1100 in a predetermined direction and includes a servomotor 150 (150X, 150Y, 150Z). The servomotor 150 is, for example, an ultra-low inertia and high output type AC servomotor, and is an electric motor of which rotation can be switched between forward and reverse rotations. The use of such ultra-low inertia and high output type servomotor 150 enables to drive the servomotor to repeatedly rotate back and forth (forward and reverse reversing drive) at high frequencies of 100 Hz or higher.

The first, second, and third actuators 1200, 1300, and 1400 are configured by attaching motors, power transmission members and the like on base plates 1202, 1302, and 1402, respectively. The base plates 1202, 1302, and 1402 are fixed to a device base 1002 by bolts not shown.

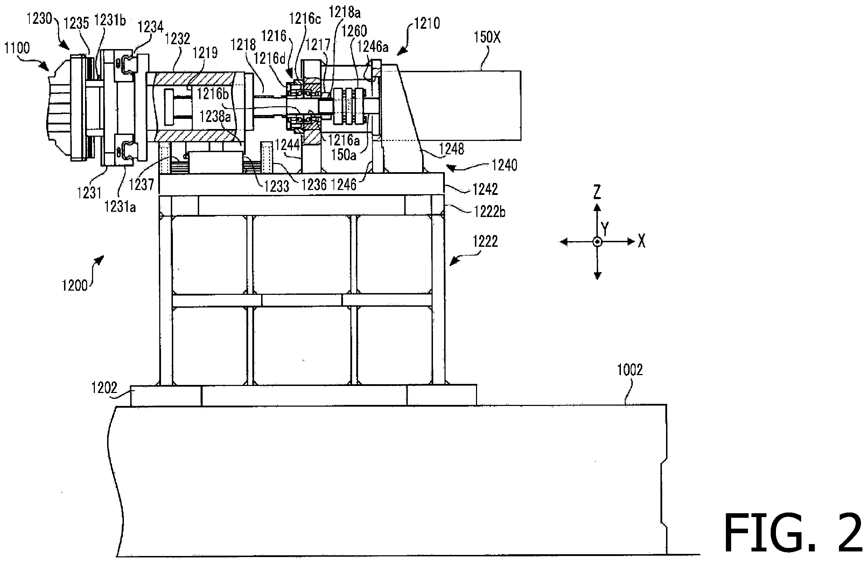

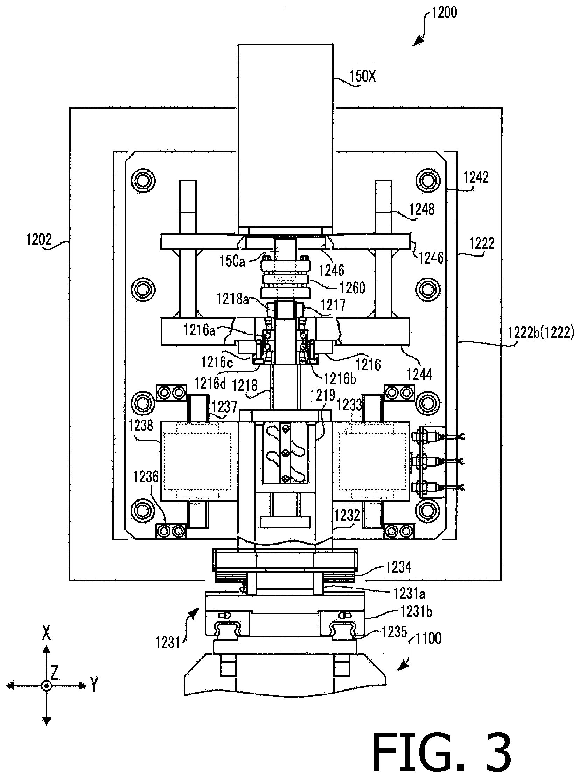

Next, the configuration of the first actuator 1200 will be described. FIG. 2 is a side view of the first actuator 1200 according to the first embodiment of the present invention viewed in the Y-axis direction (from the right side toward the left side in FIG. 1). FIG. 3 is a plan view of the first actuator 1200. In FIGS. 2 and 3, a portion is shown in cross-sectional view to illustrate the internal structure. In the following description, a direction along the X axis from the first actuator 1200 toward the table 1100 is defined as an "X-axis positive direction" and a direction along the X axis from the table 1100 toward the first actuator is defined as an "X axis negative direction."

As shown in FIG. 2, a frame 1222 consisting of a plurality of beams 1222a and a top plate 1222b fixed to each other by welding or the like (Welding, brazing, gluing, screw fixing, caulking and other fixing methods. Hereinafter, "welding or the like" is used in the same meaning.) is fixed on the base plate 1202 by welding or the like. A bottom plate 1242 of a support mechanism 1240 for supporting a drive mechanism 1210 for vibrating the table 1100 (FIG. 1) and a coupling mechanism 1230 for transmitting the vibratory motion by the drive mechanism 1210 to the table 1100 is fixed on the top plate 1222b of the frame 1222 via bolts not shown.

The drive mechanism 1210 includes a servomotor 150X, a coupling 1260, a bearing section 1216, a ball screw 1218, and a ball nut 1219. The coupling 1260 connects a drive shaft 150a of the servomotor 150X to the ball screw 1218. The bearing section 1216 is supported by a bearing support plate 1244 fixed by welding or the like vertically to the bottom plate 1242 of the support mechanism 1240, and rotatably supports the ball screw 1218. The ball nut 1219 engages with the ball screw 1218 while being supported by the bearing support plate 1244 to prevent the ball nut 1219 from moving about its axis. Therefore, when the servomotor 150X is driven, the ball screw rotates and the ball nut 1219 moves forward and backward in its axial direction (i.e., in the X-axis direction). This motion of the ball nut 1219 is transmitted to the table 1100 via the coupling mechanism 1230, which drives the table 1100 in the X-axis direction. By controlling the servomotor 150X to switch the direction of rotation of the servomotor 150X in short cycles, the table 1100 can be vibrated in the X-axis direction with desired amplitude and period.

A motor support plate 1246 is vertically fixed to a top surface of the bottom plate 1242 of the support mechanism 1240 by welding or the like. On one side of the motor support plate 1246 (a surface on the X-axis negative side), the servomotor 150X is cantilever supported so that the drive shaft 150a is perpendicular to the motor support plate 1246. The motor support plate 1246 is provided with an opening 1246a, and the drive shaft 150a of the servomotor 150X passes through this opening 1246a and is connected to the ball screw 1218 on the other side of the motor support plate 1246.

Since the servomotor 150X is cantilever supported by the motor support plate 1246, the motor support plate 1246 is subjected to a large bending stress, especially at the fixing point with the bottom plate 1242. To mitigate this bending stress, ribs 1248 are provided between the bottom plate 1242 and the motor support plate 1246.
the bearing section 1216 includes a pair of bearings (E.g., a pair of angular contact ball bearings 1216a and 1216b assembled in a face-to-face arrangement. The one on the X-axis negative side is the bearing 1216a and the one on the X-axis positive side is the bearing 1216b.). The bearings 1216a and 1216b are housed in a hollow portion of the bearing support plate 1244. One side of the bearing 1216b (a surface on the X-axis positive side) is provided with a bearing pressing plate 1216c, and the bearing 1216b is pressed in the X-axis negative direction by fixing the bearing pressing plate 1216c to the bearing support plate 1244 using bolts 1216d. In the ball screw 1218, a screw portion 1218a is formed on a cylindrical surface adjacent to the bearing section 1216 in the X-axis negative direction. A collar 1217 with a female thread formed on an inner circumference thereof is attached to the screw portion 1218a. By rotating the collar 1217 with respect to the ball screw 1218 to move in the X-axis positive direction, the bearing 1216a is pressed in the X-axis positive direction. Since the bearings 1216a and 1216b are pressed in the directions to get closer to each other, the bearings 1216a and 1216b to each other and a suitable preload is applied to the bearings 1216a and 1216b.

Next, the configuration of the coupling mechanism 1230 will be described. The coupling mechanism 1230 includes a linear motion section 1232, a pair of Y-axis rails 1234, a pair of Z-axis rails 1235, an intermediate stage 1231, a pair of X-axis rails 1237, a pair of X-axis runner blocks 1233 (carriages), and a runner block attachment member 1238. The X-axis rail 1237 and one or more X-axis runner blocks 1233 constitute a guideway-type circulating linear bearing ("linear guide"). The X-axis rail 1237 and one or more X-axis runner blocks 1233 constitute a guideway-type circulating linear bearing ("linear guide"). Similarly, linear guides are formed by the Y-axis rail 1234 and one or more Y-axis runner blocks 1231a, and the Z-axis rail 1235 and one or more Z-axis runner blocks 1231b. The "runner block," also called "carriage," engages with the rail so that the "runner block" can travel in a direction in which the rail extends.

The linear motion section 1232 is fixed to the ball nut 1219. The pair of Y-axis rails 1234 are both rails extending in the Y-axis direction, and are arranged in the vertical direction and fixed to the X-axis positive side end of the linear motion section 1232. The pair of Z-axis rails 1235 are both rails extending in the Z-axis direction and are fixed to the X-axis negative side end of the table 1100, side-by-side in the Y-axis direction. The intermediate stage 1231 is a block to which the Y-axis runner blocks 1231a engaging with respective Y-axis rails 1234 are provided on a surface on the X-axis negative side and the Z-axis runner blocks 1231b engaging with respective Z-axis rails 1235 are provided on a surface on the X-axis positive side. The intermediate stage 1231 is configured to be slidable with respect to both the Y-axis rails 1234 and the Z-axis rails 1235.

That is, the intermediate stage 1231 can slide in the Z-axis direction with respect to the table 1100 and in the Y-axis direction with respect to the linear motion section 1232. Therefore, the linear motion section 1232 can slide in the Y-axis and Z-axis directions with respect to the table 1100. Accordingly, even if the table 1100 is vibrated in the Y-axis direction and/or Z-axis direction by the other actuator(s) 1300 and/or 1400, the linear motion section 1232 does not displace by the vibration. That is, bending stresses caused by the displacement of the table 1100 in the Y-axis and/or Z-axis directions will not act on the ball screw 1218, the bearing section 1216, coupling 1260 and the like.

The pair of X-axis rails 1237, both extending in the X-axis direction, are fixed on the bottom plate 1242 of the support mechanism 1240, side by side in the Y-axis direction. The X-axis runner blocks 1233 engages with these X-axis rails 1237, respectively, and can slide along the X-axis rails 1237. The runner block attachment member 1238 is a member that is fixed to a bottom surface of the linear motion section 1232 to protrude toward both sides in the Y-axis direction, and the X-axis runner blocks 1233 are fixed to the bottom of the runner block attachment member 1238. Thus, the linear motion section 1232 is guided by the X-axis rails 1237 via the runner block attachment member 1238 and the X-axis runner blocks 1233, which allows the linear motion section 1232 to move only in the X-axis direction.

As described above, since the moving direction of the linear motion section 1232 is restricted to the X-axis direction only, when the servomotor 150X is driven to rotate the ball screw 1218, the linear motion section 1232 and the table 1100 connected to this linear motion section 1232 move forward and backward in the X-axis direction.

Regulation blocks 1236 disposed to sandwich the X-axis runner block 1233 from both sides in the X-axis direction are provided on the bottom plate 1242 of the support mechanism 1240. These regulation blocks 1236 are for restricting a moving range of the linear motion section 1232. That is, if the servomotor 150X is driven to continue moving the linear motion section 1232 in the X-axis positive direction, eventually the runner block attachment member 1238 contacts the regulation block 1236 positioned on the X-axis positive side, and the linear motion section 1232 cannot move further in the X-axis positive direction. The same is true when the linear motion section 1232 is made to continue to move toward the X-axis negative direction, and the runner block attachment member 1238 contacts the regulation block 1236 positioned on the X-axis negative side, and the linear motion section 1232 cannot move further in the X-axis negative direction.

The first actuator 1200 described above and the second actuator 1300 have the same structure except that they are installed in different directions (the X and Y axes are interchanged). Therefore, a detailed explanation of the second actuator 1300 is omitted.

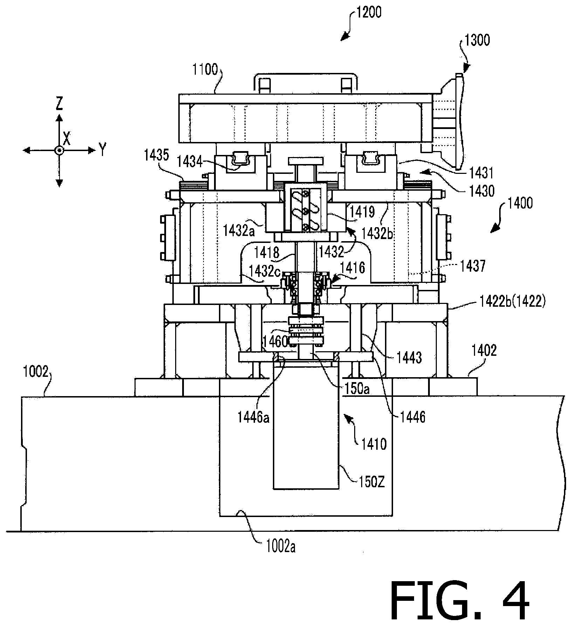

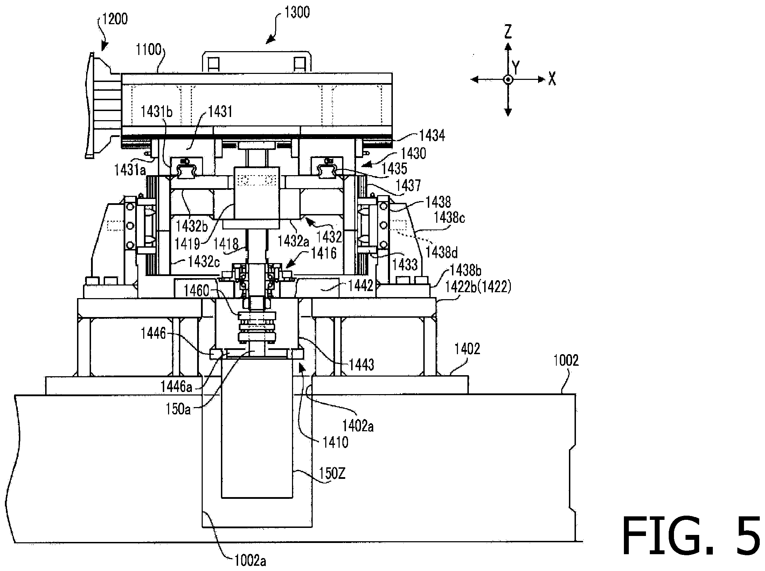

Next, the configuration of the third actuator 1400 according to the embodiment of the present invention will be described. FIG. 4 is a side view of the table 1100 and the third actuator 1400 viewed from the X-axis direction (from bottom to top in FIG. 4). This side view is also partially shown in cross-sectional view to show the internal structure. FIG. 5 is a side view of the table 1100 and the third actuator 1400 according to the embodiment of the present invention viewed from the Y-axis direction (from left to right in FIG. 1). FIG. 5 is also partially shown in cross-sectional view to show the internal structure. In the following description, a direction along the Y-axis from the second actuator 1300 toward the table 1100 is defined as a Y-axis positive direction, and a direction along the Y-axis from the table 1100 toward the second actuator 1300 is defined as a Y-axis negative direction.

As shown in FIGS. 4 and 5, a frame 1422 consisting of a plurality of beams 1422a extending in the vertical direction and a top plate 1422b disposed to cover the plurality of beams 1422a from above is provided on the base plate 1402. Each of the beams 1422a is fixed to a top surface of the base plate 1402 at its lower end and to a bottom surface of the top plate 1422b at its upper end by welding or the like. A bearing support plate 1442 of a support mechanism 1440 is fixed on the top plate 1422b of the frame 1422 with not-shown bolts. The bearing support plate 1442 is a member for supporting a drive mechanism 1410 for vibrating the table 1100 (FIG. 1) in the vertical direction and a coupling mechanism 1430 for transmitting the vibratory motion by the drive mechanism 1410 to the table.

The drive mechanism 1410 has the servomotor 150Z, a coupling 1460, a bearing section 1416, a ball screw 1418, and a ball nut 1419. The coupling 1460 connects the drive shaft 150a of the servomotor 150Z to the ball screw 1418. The bearing section 1416 is fixed to the aforementioned bearing support plate 1442 and is configured to rotatably support the ball screw 1418. The ball nut 1419 engages with the ball screw 1418 while being supported by the bearing support plate 1442 so that it does not move about its axis. Therefore, when the servomotor 150Z is driven, the ball screw rotates and the ball nut 1419 moves forward and backward in its axial direction (i.e., in the Z-axis direction). This motion of the ball nut 1419 is transmitted to the table 1100 via the coupling mechanism 1430, and the table 1100 is driven in the Z-axis direction. By controlling the servomotor 150Z to switch the direction of rotation of the servomotor 150Z in short cycles, the table 1100 can be vibrated in the Z-axis direction (vertical direction) with desired amplitude and cycle.

A motor support plate 1446, which extends in the horizontal direction (XY plane), is fixed to a lower surface of the bearing support plate 1442 of the support mechanism 1440 via two connecting plates 1443. The servomotor 150Z is suspended and fixed to a lower surface of the motor support plate 1446. The motor support plate 1446 is provided with an opening 1446a, and the drive shaft 150a of the servomotor 150Z passes through this opening 1446a and is connected to the ball screw 1418 on an upper side of the motor support plate 1446.

In the present embodiment, since a dimension of the servomotor 150Z in the axial direction (vertical, Z-axis direction) is larger than a height of the frame 1422, the majority of the servomotor 150Z is disposed lower than the base plate 1402. For this reason, the device base 102 is provided with a cavity 1002a for accommodating the servomotor 150Z. Furthermore, the base plate 1402 is provided with an opening 1402a for passing the servomotor 150Z.

The bearing section 1416 is provided to penetrate through the bearing support plate 1442. Since the structure of the bearing section 1416 is similar to that of the bearing section 1216 (FIGS. 2 and 3) in the first actuator 1200, detailed description of the bearing section 1416 is omitted.

Next, the configuration of the coupling mechanism 1430 will be described. The coupling mechanism 1430 has a movable frame 1432, a pair of X-axis rails 1434, a pair of Y-axis rails 1435, a plurality of intermediate stages 1431, two pairs of Z-axis rails 1437, and two pairs of Z-axis runner blocks 1433.

The movable frame 1432 has a frame 1432a fixed to the ball nut 1419, a top plate 1432b fixed to an upper end of the frame 1432a, and side walls 1432c fixed to extend downward from both edges of the top plate 1432b in the X axis direction. The pair of Y-axis rails 1435 both extend in the Y-axis direction and are fixed to an upper surface of the top plate 1432b of the movable frame 1432 side by side in the X-axis direction. The pair of X-axis rails 1434 both extend in the X-axis direction and are fixed to a lower surface of the table 1100 side by side in the Y-axis direction. The intermediate stage 1431 is a block with an X-axis runner block 1431a that engages with the X-axis rail 1434 at the top and a Y-axis runner block 1431b that engages with the corresponding Y-axis rail 1435, and is configured to be slidable with respect to both the X-axis rail 1434 and the Y-axis rail 1435. One intermediate stage 1431 is provided at each position where the X-axis rail 1434 and the Y-axis rail 1435 intersect. since two X-axis rails 1434 and two Y-axis rails 1435 are provided, the X-axis rails 1434 and the Y-axis rails 1435 intersect at four positions. Therefore, in the present embodiment, four intermediate stages 1431 are used.

As described above, each of the intermediate stages 1431 can slide in the X-axis direction with respect to the table 1100 and in the Y-axis direction with respect to the movable frame 1432. That is, the movable frame 1432 can slide in the X-axis direction and the Y-axis direction with respect to the table 1100. Therefore, even if the table 1100 is vibrated in the X-axis direction and/or the Y-axis direction by the other actuators 1200 and/or 1300, the movable frame 1432 is not displaced by them. That is, bending stresses caused by the displacement of the table 1100 in the X-axis direction and/or the Y-axis direction will not act on the ball screw 1418, the bearing section 1416, the coupling 1460 and the like.

In the present embodiment, distances between the X-axis rails 1434 and the Y-axis rails 1435 are wider than the distances between the Y-axis rails 1234 and the Z-axis rails 1235 of the first actuator 1200 because the movable frame 1432 supports a relatively heavy table 1100 and a workpiece. Therefore, if the table 1100 and the movable frame 1432 are connected by only one intermediate stage as in the first actuator 1200, the intermediate stage becomes larger and load that acts on the movable frame 1432 increases. Therefore, in the present embodiment, the small intermediate stage 1431 is disposed at each intersection of the X-axis rails 1434 and the Y-axis rails 1435 to minimize the load that acts on the movable frame 1432.

Two pairs of Z-axis rails 1437 are rails extending in the Z-axis direction and one pair is fixed to each of the side walls 1432c of the movable frame 1432 side by side in the Y-axis direction. The Z-axis runner blocks 1433 engages with the Z-axis rails 1437, respectively, and are slidable along the Z-axis rails 1437. The Z-axis runner block 1433 is configured to be fixed to the top surface of the top plate 1422b of the frame 1422 via a runner block attachment member 1438. The runner block attachment member 1438 has a side plate 1438a disposed substantially parallel to the side wall 1432c of the movable frame 1432 and a bottom plate 1438b fixed to a lower end of this side plate 1438a, and has an L-shaped cross-sectional shape as a whole. In the present embodiment, when a workpiece having a particularly high center of gravity and large weight is fixed on the table 1100, a large moment around the X-axis and/or the Y-axis is likely to act on the movable frame 1432. Therefore, the runner block attachment member 1438 is reinforced with ribs to withstand this rotational moment. Specifically, a pair of first ribs 1438c are provided at both ends in the Y-axis direction of a corner formed by the side plates 1438a and the bottom plate 1438b of the runner block attachment member 1438, and a second rib 1438d stretching between the pair of first ribs 1438c is further provided.

As described above, the Z-axis runner blocks 1433 are fixed to the frame 1422 and can slide with respect to the Z-axis rails 1437. Therefore, the movable frame 1432 can slide in the vertical direction, and movement of the movable frame 1432 is restricted except in the vertical direction. Because the moving direction of the movable frame 1432 is restricted to the vertical direction only, when the servomotor 150Z is driven to rotate the ball screw 1418, the movable frame 1432 and the table 1100 that engages with the movable frame 1432 move in the vertical direction.

As described above, in the present embodiment, two pairs of rails and the intermediate stages configured to be slidable with respect to these rails are provided between each of the actuators whose drive axes are orthogonal to each other and the table 1100. Due to this configuration, for each of the actuators, the table 1100 can slide in any direction on a plane perpendicular to the driving direction of the actuator. Therefore, even if the table 1100 is displaced by one actuator, load or moment caused by this displacement does not act on the other actuators, and the other actuators and the table 1100 remain engaged with each other via the intermediate stages. That is, even if the table is displaced to any position, each actuator remains capable of displacing the table. Therefore, in the present embodiment, the three actuators 1200, 1300, and 1400 can be driven simultaneously to vibrate the table 1100 and the workpiece fixed thereon in the three axial directions.

In this system, as described above, the coupling mechanisms 1230, 1330, and 1430 including the guide mechanisms that are combinations of the rails and the runner blocks are provided between the actuators 1200, 1300, 1400 and the table 1100. Similar guide mechanisms are also provided in the actuators 1200, 1300, and 1400, and are used to guide the nuts of the ball screw mechanisms of respective actuators.

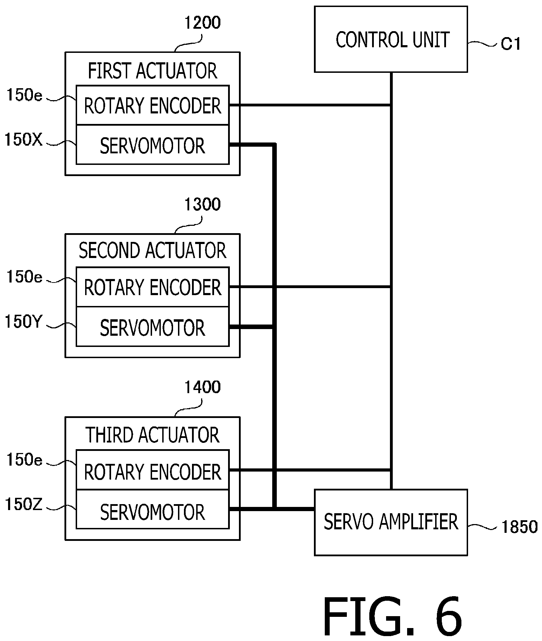

FIG. 6 is a block diagram showing a schematic configuration of a control system of the vibration test device 1000 according to the first embodiment of the present invention. The servomotors 150 are connected to a control unit C1 via a servo amplifier 1850. For example, a PLC (Programmable Logic Controller) or an IPC (Industrial Personal Computer) is used for the control unit C1. Each servomotor 150 includes a rotary encoder 150e that detects a rotational position of the drive shaft 150a. The rotary encoders 150e are connected to the control unit C1. The table 1100 and the workpiece mounted thereon can be vibrated in desired amplitudes and frequencies (or predetermined vibration waveforms) by the control unit C1 feedback-controlling the first actuator 1200, the second actuator 1300, and the third actuator 1400 (specifically, the servomotors 150X, 150Y, and 150Z) based on signals of the rotary encoders 150e.

Although the three actuators and the servo amplifier 1850 are illustrated as separate components in FIG. 6, a set of the three actuators and the servo amplifier 1850 may be regarded as a single electric actuator of the vibration test device 1000, and the control unit C1 may be regarded as a controller that controls the electric actuator.

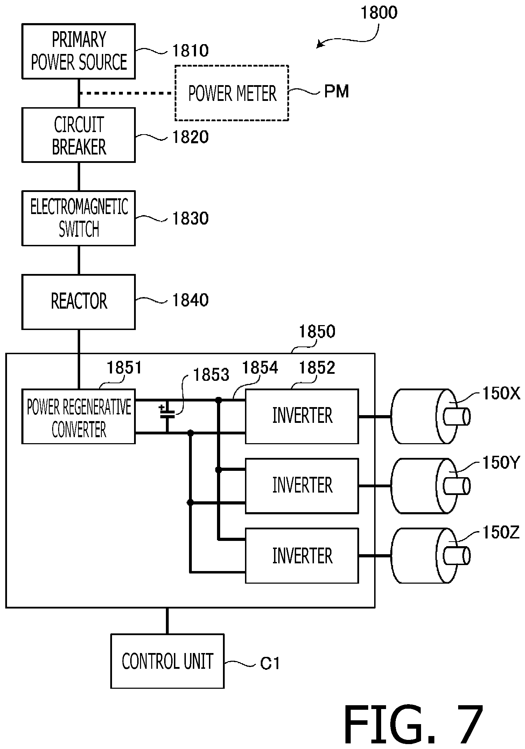

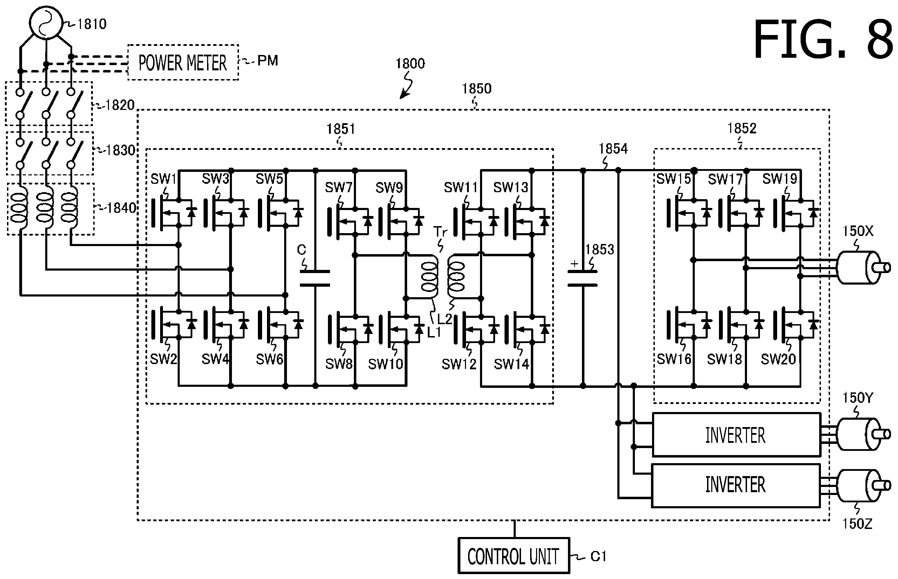

FIG. 7 is a block diagram showing a schematic configuration of an electric power feeding system 1800 that supplies electric power to the servomotor 150. FIG. 8 shows the circuit configuration of the electric power feeding system 1800.

A primary power source 1810 (and a primary power source in each of the following embodiments) is a municipal power source or a power source device (e.g., an alternating current generator) and provides, for example, three-phase alternating current electric power. The electric power supplied from the primary power source 1810 is fed to the servo amplifier 1850 (drive device) via a circuit breaker 1820, an electromagnetic switch 1830, and a reactor 1840. The servomotors 150 are connected to output terminals of the servo amplifier 1850 and the servo amplifier 1850 supplies driving electric power to the servomotors 150. The servo amplifier 1850 is communicatively connected to the control unit C1 and operates in accordance with control by the control unit C1.

The servo amplifier 1850 includes a power regenerative converter 1851, inverters 1852, and a capacitor 1853 (first capacitor) provided between the power regenerative converter 1851 and the inverters 1852 (servomotors 150). The power regenerative converter 1851 is, for example, a PWM (Pulse Width Modulation) converter that sinusoidalizes a power source side current by PWM control. The power regenerative converter 1851 may also convert electric power using the 120-degree-energization method. The inverter 1852 is, for example, a PWM inverter that controls electric power to be output by PWM control.

The servo amplifier 1850 including the inverters 1852 is a drive device that is supplied with electric power from the primary power source 1810 and controlled by control unit C1 being the controller to supply driving electric power to the servomotors 150 being electric motors to vibrate the vibrating table 1100 at desired amplitudes and frequencies. The power regenerative converter 1851 included in the servo amplifier 1850 regenerates electric power that is not consumed by acceleration of the servomotors 150 being electric motors, among electric power regenerated from the servomotors 150 when the vibrating table 1100 is vibrated at the desired amplitudes and frequencies, to the power source.

The power regenerative converter 1851 of the present embodiment has a function of rectifying alternating current supplied from the primary power source 1810 during power operation (i.e., an operation mode in which the servomotors 150 are driven by the electric power supplied from the servo amplifier 1850) and a function of generating alternating current of a quality equivalent to the system electric power to be returned to the primary power source 1810 during regenerative operation (i.e., an operation mode in which the servomotors 150 generate regenerative electric power and supply the regenerative electric power to the servo amplifier 1850). However, a converter dedicated to the power operation and a converter dedicated to the electric power regeneration may be provided separately.

The power regenerative converter 1851 includes switching elements SW1 to S14, a capacitor (or condenser) C, and a transformer Tr. Each inverter 1852 includes switching elements SW15 to SW20. The switching elements SW1 to SW20 are, for example, IGBTs.

When electric power supplied from the primary power source 1810 (e.g., a single-phase three-wire commercial power source or a three-phase three-wire commercial power source) is supplied to the servomotors 150X, 150Y, and 150Z, the alternating current electric power supplied from the primary power source 1810 is rectified by the control unit C1 repeatedly turning the switching elements SW1 to SW6 on and off in accordance with a frequency of the alternating current electric power supplied from the primary power source 1810.

When the electric power supplied from the primary power source 1810 is supplied to the servomotors 150X, 150Y, and 150Z, the electric power rectified by the switching elements SW1 to SW6 is smoothed by the capacitor C.

When the electric power supplied from the primary power source 1810 is supplied to the servomotors 150X, 150Y, and 150Z, the electric power smoothed by the capacitor C is transmitted from a primary coil L1 to a secondary coil L2 of the transformer Tr by the control unit C1 repeatedly turning the switching elements SW7 and SW10 and the switching elements SW8 and SW9 on and off alternately.

When the electric power supplied from the primary power source 1810 is supplied to the servomotors 150X, 150Y, and 150Z, the electric power transmitted from the primary coil L1 to the secondary coil L2 is rectified by the control unit C1 repeatedly turning the switching elements SW11 and SW14 and the switching elements SW12 and SW13 on and off alternately.

When the electric power supplied from the primary power source 1810 is supplied to the servomotors 150X, 150Y, and 150Z, the electric power rectified by the switching elements SW11 to SW14 is smoothed by the capacitor 1853.

When the electric power supplied from the primary power source 1810 is supplied to the servomotors 150X, 150Y, and 150Z, the electric power smoothed by the capacitor 1853 is converted into alternating current electric powers with phase differences of 120 degrees by the control unit C1 repeatedly turning the switching elements SW15 to SW20 on and off, respectively, and is supplied to the servomotors 150X, 150Y, and 150Z.

When regenerated electric powers from the servomotors 150X, 150Y, and 150Z are supplied to the servo amplifier 1850, three-phase alternating current electric powers supplied from the servomotors 150X, 150Y, and 150Z, respectively, are rectified by diodes connected in parallel with the switching elements SW15 to SW20, respectively.

When the regenerated electric powers from the servomotors 150X, 150Y, and 150Z are supplied to the servo amplifier 1850, the electric powers rectified by the diodes connected in parallel with the switching elements SW15 to SW20, respectively, are smoothed by the capacitor 1853.

When the regenerated electric power from the servomotors 150X, 150Y, and 150Z is supplied to the servo amplifier 1850, the electric power smoothed by the capacitor 1853 is transmitted from the secondary coil L2 to the primary coil L1 of the transformer Tr by the control unit C1 repeatedly turning the switching elements SW11 and SW14 and the switching elements SW12 and SW13 on and off alternately.

When the regenerated electric powers from the servomotors 150X, 150Y, and 150Z are supplied to the servo amplifier 1850, the electric power transmitted from the secondary coil L2 to the primary coil L1 is rectified by diodes connected in parallel with the switching elements SW7 to SW10, respectively.

When the regenerated electric powers from the servomotors 150X, 150Y, and 150Z are supplied to the servo amplifier 1850, the electric power rectified by the diodes connected in parallel with the switching elements SW7 to SW10, respectively, is smoothed by the capacitor C.

When regenerated electric power from the servomotors 150X, 150Y, and 150Z is supplied to the servo amplifier 1850, the electric power smoothed by the capacitor C is converted into alternating current electric power by the control unit C1 repeatedly turning the switching elements SW1 to SW6 on and off, respectively, and is supplied to the primary power source 1810.

When driving the servomotors 150 (during the power operation), alternating current electric power output from the reactor 1840 is converted into direct current by a bridge circuit of the power regenerative converter 1851 (e.g., IGBT bridge circuit), smoothed by the capacitor 1853, and then converted into driving electric power (e.g., pulse train) by the inverter 1852. The driving electric power output from the inverter 1852 is input to the servomotors 150 to rotate and drive the servomotors 150.

When the servomotor 150 generates regenerative electric power (during the regenerative operation), the regenerative electric power output from the servomotors 150 is converted into direct current by the inverter 1852 and input to the power regenerative converter 1851 via a direct current bus bar 1854. The power regenerative converter 1851 converts the direct current electric power supplied from the direct current bus bar 1854 to sinusoidal alternating current and outputs it to the primary power source 1810 via the reactor 1840, the electromagnetic switch 1830 and the circuit breaker 1820. In more detail, the control unit C1 controls the servomotors 150 so that the servomotors 150 repeat forward and reverse rotations at the required frequency during a drive period of the servomotors 150. For example, control unit C1 may control the inverter 1852 so that servomotor 150 repeats forward and reverse rotations at the required frequency of 3 Hz or higher in the drive period. The power regenerative converter 1851 outputs a portion of the electric power regenerated from the servomotors 150 during the deceleration processes of the servomotors 150 in the forward and reverse rotations, respectively, to the primary power source 1810.

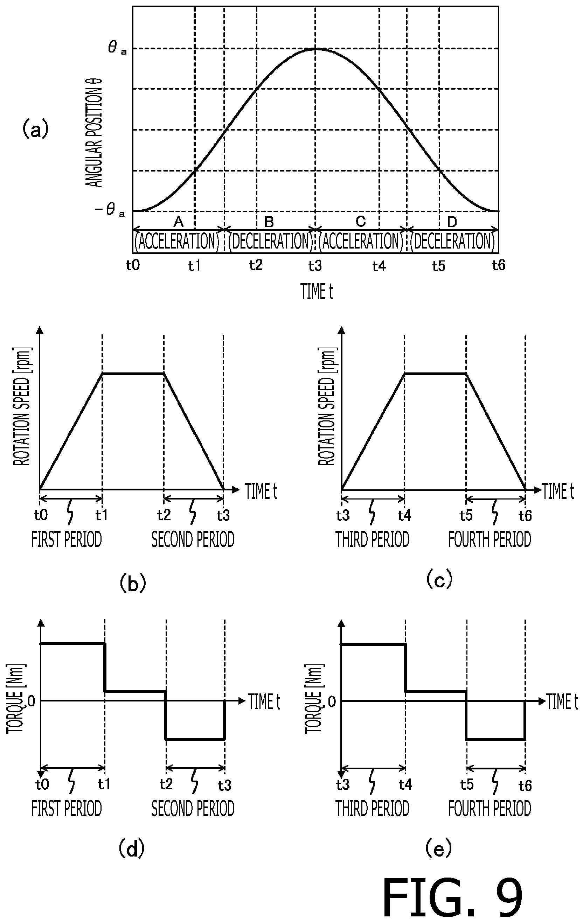

FIG. 9(a) is a graph showing a drive waveform of one cycle of the servomotor 150 when vibrating with a sine wave. FIG. 9(b) is a simplified graph showing a change in the rotation speed [rpm] of the servomotor 150 in the first half of one cycle of the servomotor 150, and FIG. 9(c) is a simplified graph showing the change in the rotation speed of the servomotor 150 in the second half of one cycle of the servomotor 150. FIG. 9(d) is a simplified graph showing a change in torque [Nm] of the servomotor 150 in the first half of one cycle of the servomotor 150, and FIG. 9(e) is a simplified graph showing the change in torque of the servomotor 150 in the second half of one cycle of the servomotor 150. In FIG. 9(a), the horizontal axis represents time t, and the vertical axis represents an angular position θ of the drive shaft 150a. In FIGS. 9(b) and 9(c), the horizontal axis represents time t, and the vertical axis represents the rotation speed of the servomotor 150. In FIGS. 9(d) and 9(e), the horizontal axis represents time t and the vertical axis represents the torque of the servomotor 150. The respective time widths in FIGS. 9(a) through 9(e) coincide with each other.

The servomotor 150 is driven so that the angular position θ of the drive shaft 150a fluctuates repeatedly in the range of -θa to θa in accordance with a sinusoidal drive waveform during the repeated passage of time t from time t0 to time t6. The drive waveform of the servomotor 150 is not limited to a sine wave. When the drive waveform of the servomotor 150 is a sinusoidal drive waveform, an actual waveform of a rotation speed (the rotation speed) of the servomotor is a cosine waveform. However, in FIGS. 9(b) and 9(c), for convenience of explanation, the waveform of the rotation speed of the servomotor is shown in a simplified form, with constant speed change for a range with large rotation speed changes and no speed change (constant rotation speed) for a range with small rotation speed changes.

In section A shown in FIG. 9(a), or more precisely, for example, in the first period from time t0 to time t1, the drive shaft 150a is accelerated in the positive rotation direction. In other words, in the first period, the rotation speed of the servomotor 150 in forward rotation direction increases, and torque generated at this time is defined as a positive torque (acceleration torque). Also, at this time, electric power is supplied from the servo amplifier 1850 to the servomotor 150 (power operation). For example, in the first period, electric power accumulated in the capacitor 1853 and the capacitor C is supplied to the servomotors 150, and shortfall of electric power is supplied to the servomotors 150 from the primary power source 1810 (via the servo amplifier 1850).

In the section B shown in FIG. 9(a), or more precisely, for example, in the second period from time t2 to time t3, the drive shaft 150a is decelerated in the positive rotation direction. In other words, in the second period, the rotation speed of the servomotor 150 in the forward rotation direction decreases, and negative torque (deceleration torque) is generated. At this time, regenerative electric power is supplied from the servomotors 150 to the servo amplifier 1850 (regenerative operation). For example, in the second period, the regenerated electric power from the servomotors 150 is accumulated in the capacitor 1853 and the capacitor C, and the regenerated electric power exceeding the capacity of these capacitors is output to the primary power source 1810. In other words, the power regenerative converter 1851 regenerates a portion of the regenerated electric power from the servomotors 150 to the primary power source 1810 via the capacitor 1853 and the capacitor C.

In section C shown in FIG. 9(a), or more precisely, for example, in the third period from time t3 to time t4, the drive shaft 150a is accelerated in the negative rotational direction. In other words, in the third period, the rotation speed of the servomotor 150 in the reverse rotation direction increases, and torque generated at this time is defined as a positive torque (acceleration torque). At this time, electric power is supplied from the servo amplifier 1850 to the servomotor 150 (power operation). For example, in the third period, the electric power accumulated in the capacitor 1853 and the capacitor C is supplied to the servomotor 150, and shortfall of electric power is supplied to the servomotor 150 from the primary power source 1810 (via the servo amplifier 1850).

In the section D shown in FIG. 9(a), or more precisely, for example, in the fourth period from time t5 to time t6, the drive shaft 150a is decelerated in the negative rotation direction. In other words, in the fourth period, the rotation speed of the servomotor 150 in the reverse rotation direction decreases, and negative torque (deceleration torque) is generated. At this time, regenerative electric power is supplied from the servomotors 150 to the servo amplifier 1850 (regenerative operation). For example, in the fourth period, the regenerated electric power from the servomotors 150 is accumulated in the capacitor 1853 and the capacitor C, and the regenerated electric power exceeding the capacity of these capacitors is output to the primary power source. In other words, the power regenerative converter regenerates a portion of the regenerated electric power from the servomotor 150 to the primary power source 1810 via the capacitor 1853 and the capacitor C.

As described above, in the vibration test device 1000, among a forward rotation period (sections A and B) and a reverse rotation period (sections C and D) of the servomotor 150 that are continuously repeated, the vibrating table 1100 moves in the forward direction during the forward rotation period, and the vibrating table 1100 moves in the reverse direction during the reverse rotation period. As shown in FIG. 9(b), the forward rotation period includes a first acceleration period of the servomotor 150 (first period) that starts at the time when the vibrating table 1100 starts moving (time t0) and a first deceleration period of the servomotor 150 (second period) that ends when the vibrating table 1100 stops moving (time t3). As shown in FIG. 9(c), the reverse rotation period includes a second acceleration period of the servomotor 150 (third period) that starts at the time when the vibrating table 1100 starts moving (time t3) and a second deceleration period of the servomotor 150 (fourth period) that ends at the time when the vibrating table 1100 stops moving (time t6).

As shown in FIG. 9(d), during the first acceleration period (first period), the control unit C1 accelerates the servomotors 150 so that the torque of the servomotors 150 becomes positive, and during the first deceleration period (second period), the control unit C1 decelerates the servomotors 150 so that the torque of the servomotor 150 becomes negative. As shown in FIG. 9(e), during the second acceleration period (third period), the control unit C1 accelerates the servomotors 150 so that the torque of the servomotors 150 becomes positive, and during the second deceleration period (fourth period), the control unit C1decelerates the servomotors 150 so that the torque of the servomotors 150 becomes negative.

The control unit C1 also controls the inverter 1852 so that, for example, energy regenerated from the servomotors 150 and accumulated in the capacitor during the first deceleration period is supplied to the servomotors 150 with priority over energy supplied from the primary power source 1810 during the second acceleration period, and the energy regenerated from the servomotors 150 and accumulated in the capacitor during the second deceleration period is supplied to the servomotors 150 with priority over the energy supplied from the primary power source 1810 during the first acceleration period.

The control unit C1, for example, repeats the energy cycle consisting of the first acceleration period (first period), the first deceleration period (second period), the second acceleration period (third period), and the second deceleration period (fourth period) during the above-mentioned drive period of the servomotors 150. In the first acceleration period, at least the energy accumulated in the capacitor during the second deceleration period in the previous energy cycle is supplied to the servomotors 150. In the first deceleration period, regenerated energy from the servomotors 150 is accumulated in the capacitor. In the second acceleration period, at least the energy accumulated in the capacitor during the first deceleration period in this energy cycle is supplied to the servomotors 150. In the second deceleration period, the regenerated energy from the servomotors 150 is accumulated in the capacitor.

In the vibration test device 1000, the electric power to be supplied from the primary power source 1810 to the servomotor 150 during the next power operation can be reduced because the electric power accumulated in capacitor 1853 and the capacitor C during regeneration can be used to drive the servomotors 150 during the next power operation by repeating the power operation and the regenerative operation. This allows to make the electric power feeding system 1800 more power-efficient. By repeating acceleration (power operation) and deceleration (regenerative operation) while alternating the direction, the drive shaft 150a of the servomotor 150 rotates back and forth. Such reciprocating rotation is repeated, for example, at a repetition frequency of 500 Hz at maximum.

As described above, in the present embodiment, the supply of electric power to the servomotors 150 and the generation of the regenerative electric power by the servomotors 150 are repeated alternately to cause the servomotors 150 to perform repeated acceleration and deceleration operations. Short-time (e.g., about one cycle of the servomotor 150) voltage fluctuations in the direct current bus bar 1854 due to the transfer of electric power to and from the servomotors 150 are mainly regulated by the capacitor 1853. Therefore, most of the amount of electric power supplied to the servomotors 150 in sections A and C is recovered as the regenerative electric power in sections B and D, allowing the servomotors 150 to be driven with almost no consumption of electric power supplied from the primary power source 1810.

Experiments were conducted to investigate the energy-saving performance of the vibration test device 1000. Table 1 is a list of experimental conditions and results. In this experiment, only the servomotor 150X was operated.

**[Table 1]**

| No. | FREQUENCY F | TORQUE T₀ | POWER CONSUMPTION VALUE W_{A} | OUTPUT POWER VALUE W_{B} | ENERGY SAVING RATE R=100(1-W_{A}/W_{B}) |
|---|---|---|---|---|---|
| 1 | 10 Hz | 23.5 % | 0.354 kW | 7.808 kW | 95.5 % |
| 2 | 25 Hz | 70.0 % | 1.093 kW | 26.959 kW | 95.9 % |
| 3 | 50 Hz | 76.0 % | 0.971 kW | 15.777 kW | 93.8 % |
| 4 | 75 Hz | 76.0 % | 0.870 kW | 10.539 kW | 91.7 % |
| 5 | 100 Hz | 64.0 % | 0.843 kW | 5.641 kW | 85.1 % |
| 6 | 125 Hz | 77.0 % | 0.991 kW | 6.449 kW | 84.6 % |
| 7 | 150 Hz | 62.7 % | 0.781 kW | 3.598 kW | 78.3 % |
| 8 | 175 Hz | 74.0 % | 1.037 kW | 4.267 kW | 75.7 % |
| 9 | 200 Hz | 83.0 % | 1.338 kW | 4.672 kW | 71.4 % |

"Frequency F" is the number of times per second that one cycle of driving shown in FIG. 9 is repeated.

In this experiment, the frequency F was varied at 25Hz intervals up to a maximum of 200Hz, and an electric power consumption value W_{A} and output electric power value W_{B} were measured at each frequency F. However, the minimum frequency was set at 10 Hz because measurement is impossible or measurement accuracy decreases at the frequency F of and around 0Hz.

"Torque T₀" is a maximum value (amplitude) of a relative torque (expressed as a percentage against a rated torque) of the drive shaft 150a of the servomotor 150.

"Power consumption value W_{A}" is an average value of the electric power consumption of the electric power feeding system 1800 as a whole, as measured by a power meter PM upstream of the circuit breaker 1820 (FIG. 7).

"Output power value W_{B}" is an average value of the electric power output from the servo amplifier 1850 to the servomotor 150.

"Energy Saving Rate R" is a ratio of electric power consumption reduced by the reuse of the regenerative electric power and is calculated by R = 100 X (1-W_{A}/W_{B}).

By using the vibration test device 1000 (specifically, the electric power feeding system 1800) of the present embodiment, the energy saving rate of over 70% is achieved at frequencies F equal to or below 200Hz. In particular, the energy saving rate of over 90% is achieved in the low frequency range equal to or below 75Hz.

The reduction of electric power consumption by the electric power feeding system 1800 of the present embodiment can be obtained even when the repetition frequency of the reciprocating rotation of the servomotor 150 is set at 1Hz, but when the repetition frequency is set at 3Hz or higher (more preferably 5Hz or higher), the regenerative electric power is efficiently reused by the servomotor 150 itself, resulting in a good energy saving rate.

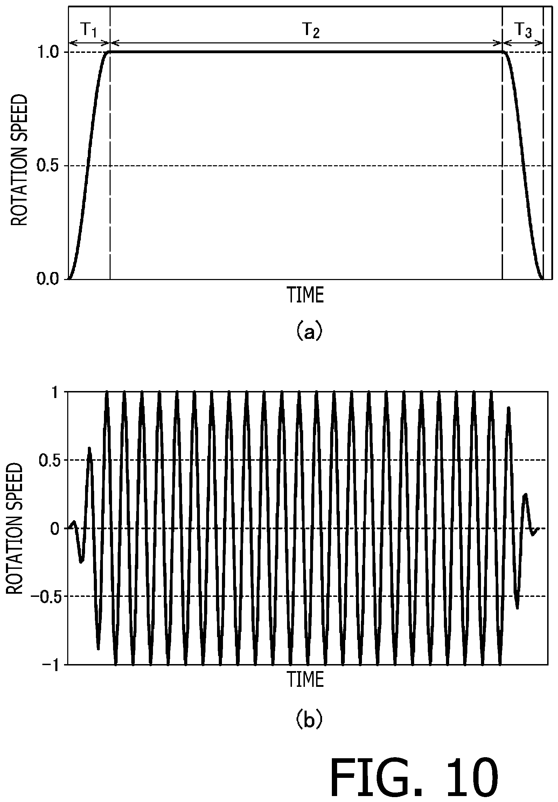

FIG. 10(a) is a graph schematically showing a drive waveform of a conventional typical motor, and FIG. 10(b) is a graph schematically showing the drive waveform of the servomotor 150 of the present embodiment.

As shown in FIG. 10(a), in the driving of a conventional typical motor, the motor is accelerated to a predetermined rotation speed in section T₁, then continuously driven at a constant rotation speed (section T₂), and decelerated to a stop at the end (section T₃). In this type of drive, regenerative electric power is generated only in section T₃. Therefore, the effect of reduction in electric power consumption through the use of the regenerative electric power is modest.

On the other hand, in the present embodiment, as shown in FIG. 10(b), the acceleration and deceleration of the servomotor 150 are repeated at a high frequency over the entire section from the start to the end of the drive. The regenerative electric power is generated repeatedly at a high frequency at the timing of the deceleration of the servomotor 150.That is, the regenerative electric power is generated steadily from the start to the end of the drive. Therefore, in the present embodiment, the effect of reduction in electric power consumption through the use of the regenerative electric power is extremely significant.

### (Second embodiment)

Next, an example of the application of the present invention to a tire test device will be described. A tire test device according to a second embodiment of the present invention described below is a test device capable of performing wear tests, endurance tests, driving stability tests and the like on tires.

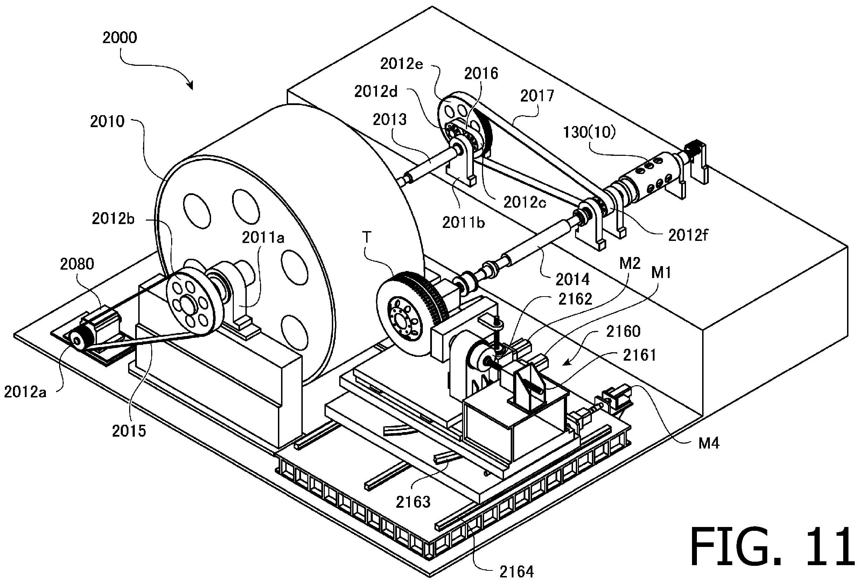

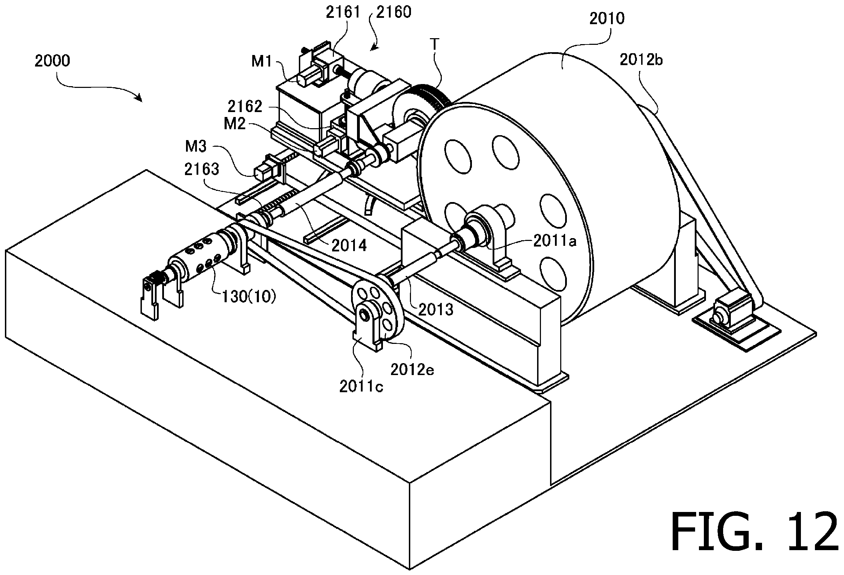

FIGS. 11 and 12 are perspective views of a tire test device 2000 according to the second embodiment of the present invention, viewed from different directions. The tire test device 2000 of the present embodiment includes a rotating drum 2010 with a simulated road surface formed on an outer circumference thereof, an alignment adjustment mechanism 2160 that rotatably holds a tire T with the tire T in contact with the simulated road surface in a predetermined posture, a torque generator 130 (slip rate control device) that generates torque to be applied to the tire T, and an inverter motor 80 that rotationally drives the rotating drum 2010 and a casing of the torque generator 130.

The rotating drum 2010 is rotatably supported by a pair of bearings 2011a. A pulley 2012a is attached to an output shaft of the inverter motor 80, and a pulley 2012b is attached to one shaft of the rotating drum 2010. The pulley 2012a and the pulley 2012b are connected by a drive belt 2015 (e.g., toothed belt). A pulley 2012c is attached to the other shaft of the rotating drum 2010 via a relay shaft 2013. The relay shaft 2013 is rotatably supported by a bearing 2011b near one end where the pulley is attached. The pulley 2012c is connected to a pulley 2012d by a drive belt 2016. The pulley 2012d is coaxially fixed to a pulley 2012e and is rotatably supported by a bearing 2011c (FIG. 12) together with the pulley 2012e. The pulley 2012e is connected to a later-described shaft part 131a of the casing 131 of the torque generator 130 by a drive belt 2017.

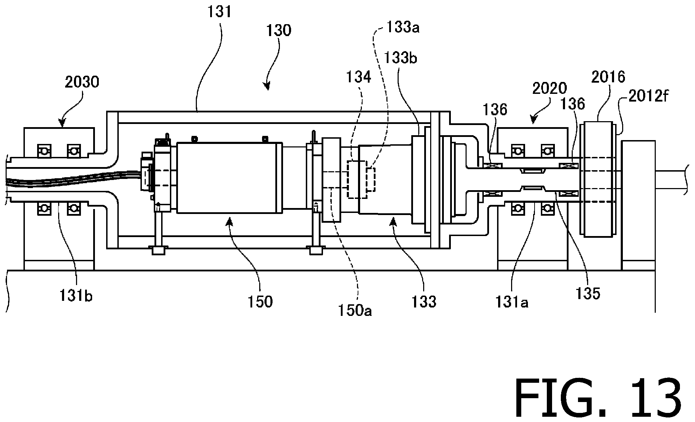

FIG. 13 is a diagram showing an internal structure of the torque generator 130. The torque generator 130 includes the casing 131, and the servomotor 150 and a reduction gear 133 fixed inside the casing 131. In the present embodiment, the servomotor 150 having the same configuration as that of the first embodiment is used. Cylindrical shaft parts 131a and 131b are formed at both ends of the casing 131 in an axial direction. The casing 131 is rotatably supported by bearings 2020 and 2030 at the shaft parts 131a and 131b. A pulley 2012f is attached to an outer circumference of the shaft part 131a at one end (right end side in FIG. 13).

The reduction gear 133 has an input shaft 133a and an output shaft 133b, and rotational motion input to the input shaft 133a is reduced and output to the output shaft 133b. The input shaft 133a of the reduction gear 133 is connected to the drive shaft 150a of the servomotor 150 by a coupling 134. The output shaft 133b of the reduction gear 133 is connected to the coupling shaft 135. It should be noted that the reduction gear 133 is optionally provided in the torque generator 130. The coupling shaft 135 may be directly connected to the drive shaft 150a of the servomotor 150 without providing the reduction gear 133 in the torque generator 130.

The coupling shaft 135 is passed through a hollow portion of the cylindrical shaft part 131a of the casing 131 and is rotatably supported by a pair of bearings 136 provided on the inner circumference of the shaft part 131a. A tip of the coupling shaft 135 protrudes from a tip of the shaft part 131a. The coupling shaft 135 protruding from the shaft part 131a is connected to a spindle of the alignment adjustment mechanism 2160 via a constant velocity joint 2014 (FIG. 11). A wheel on which a tire T is mounted is attached to the spindle of the alignment adjustment mechanism 2160. That is, the servomotor 150 has a rotary shaft (the drive shaft 150a) that is connected to a central axis of the tire T.

Therefore, when the inverter motor 80 is driven, the rotating drum 2010 rotates and the casing 131 of the torque generator 130 connected to the inverter motor 80 via the rotating drum 2010 rotates. When the torque generator 130 is not activated, the rotating drum 2010 and the tire T rotate in opposite directions so that peripheral speeds at the contacting portion become the same. By activating the torque generator 130, dynamic or static driving and braking forces can be applied to the tire T.

In the present embodiment, the power output from the inverter motor 80 is again transmitted to the rotating drum 2010 via the rotating drum 2010, the relay shaft 2013, the torque generator 130, the constant velocity joint 2014, the spindle of the alignment adjustment mechanism 2160, and the tire T. That is, the power transmission path consisting of the rotating drum 2010, the relay shaft 2013, the torque generator 130, the constant velocity joint 2014, the spindle of the alignment adjustment mechanism 2160, and the tire T constitute a power circulation system. Therefore, the power of the inverter motor 80 is used efficiently and the tire test device 2000 can operate with less electric power consumption.

The alignment adjustment mechanism 2160 of the present embodiment is a mechanism that supports the tire T, which is a test specimen, on a wheel in a rotatable state and presses a tread portion of the tire T against the simulated road surface of the rotating drum 2010, and adjusts orientation of the tire T with respect to the simulated road surface and a tire load (contact pressure) to a set state. The alignment adjustment mechanism 2160 includes a tire load adjustment part 2161 that adjusts the tire load by moving a position of the rotation axis of the tire T in a radial direction of the rotating drum 2010, a slip angle adjustment part 2162 that adjusts a slip angle of the tire T with respect to the simulated road surface by tilting the rotation axis of the tire T around a perpendicular line of the simulated road surface, a camber angle adjustment part 2163 that adjusts a camber angle by tilting the rotation axis of the tire T with respect to the rotation axis of the rotating drum 2010, and a traverse device 2164 that moves the tire T in a direction of the rotation axis. The tire load adjustment part 2161, the slip angle adjustment part 2162, the camber angle adjustment part 2163, and traverse device 2164 include servomotors M1, M2, M3, and M4, respectively. The servomotors M1, M2, M3 and M4 are, for example, AC servomotors.

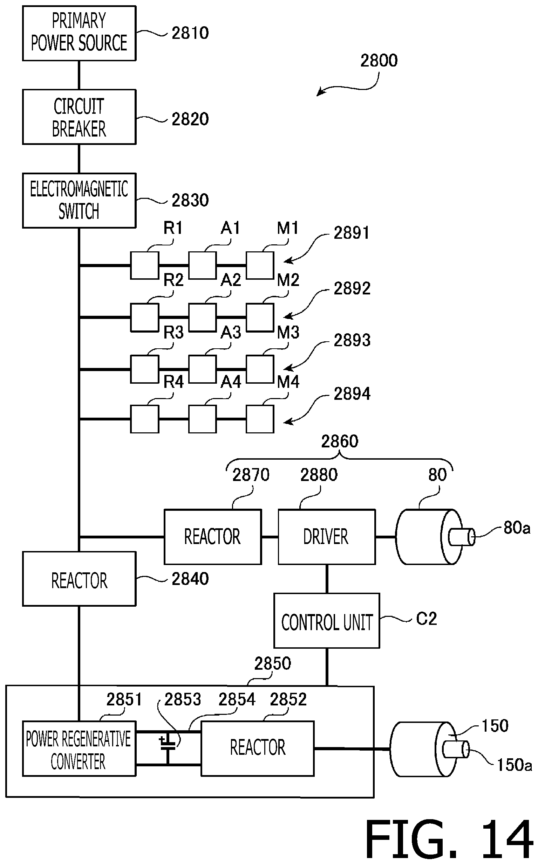

FIG. 14 is a block diagram showing a schematic configuration of an electric power feeding system 2800 according to the second embodiment of the present invention that supplies electric power to the servomotor 150 and the inverter motor 80.

The electric power feeding system 2800 of the present embodiment differs from the electric power feeding system 1800 of the first embodiment in that the electric power feeding system 2800 has an electric power feeding system 2860 (a reactor 2870 and a driver 2880) that supplies electric power to the inverter motor 80 branched from the rear stage of an electromagnetic switch 2830, and the electric power feeding systems 2891 (a reactor R1 and a servo amplifier A1), 2892 (a reactor R2 and a servo amplifier A2), 2893 (a reactor R3 and a servo amplifier A3), and 2894 (a reactor R4 and a servo amplifier A4) that supplies electric power to the servomotors M1, M2, M3, and M4 of the alignment adjustment mechanism 2160, respectively, and that only one inverter 2852 is provided in the servo amplifier 2850. The driver 2880 is a device that generates driving electric power for the inverter motor 80 and includes a not-shown inverter circuit. The driver 2880 and the servo amplifiers A1 to A4 are each communicatively connected to a control unit C2 and operate in accordance with control by the control unit C2. The servo amplifiers A1, A2, A3, and A4 have the same configuration as a servo amplifier 2850.

In a test using the tire test device 2000 of the present embodiment, the tire T is given a rotational motion that is a composite of the rotation speed output by the inverter motor 80 and a torque generated by the torque generator 130 (specifically, the servomotor 150). In one example of the test using the tire test device 2000, the inverter motor 80 is controlled to output a constant rotation speed and the servomotor 150 is controlled to output a fluctuating torque (e.g., random vibration torque). Specifically, the servomotor 150 is driven to rotate back and forth with varying amplitude and period based on predetermined vibration waveform data. That is, the servomotor 150 is controlled by the control unit C2 to repeat forward and reverse rotations. Since the servomotor 150 is repeatedly accelerated and decelerated, the supply of driving electric power from the servo amplifier 2850 to the servomotor 150 and the supply of regenerative electric power from the servomotor 150 to the servo amplifier 2850 are repeated.

The majority of the regenerative electric power generated by the servomotor 150 is temporarily accumulated in a capacitor 2853 and then used to drive the servomotor 150. The surplus of the regenerative electric power is supplied to the electric power feeding systems 2860, 2891, 2892, 2893, and 2894 via a power regenerative converter 2851 and a reactor 2840 and used to drive the inverter motor 80 and the servomotors M1, M2, M3, and M4. Therefore, most of the regenerative electric power generated by the servomotor 150 is reused to drive the servomotors 150 and M1 to M4 and the inverter motor 80, and electric power consumption from a primary power source 2810 used to drive the servomotor 150 is slightly reduced. The regenerative electric power generated by the inverter motor 80 and the servomotors M1, M2, M3, and M4 is also reused to drive other motors (i.e., the servomotors 150, M1, M2, M3, and M4 and the inverter motor 80), further reducing electric power consumption from the primary power source 2810.

By setting the tire T in the tire test device 2000 of the configuration described above and driving the inverter motor 80 for the rotational driving, the tire T and the rotating drum 2010 rotate at the same peripheral speed. In this state, by driving the servomotor 150 of the torque generator 130 to apply driving force or braking force to the tire T, wear tests, endurance tests, driving stability tests and the like of the tire T simulating actual driving conditions can be conducted.

The tire test device 2000 includes an electric actuator that applies torque to the tire T and the control unit C2. As shown in FIG. 14, the electric actuator of the tire test device 2000 includes the servomotor 150, the inverter 2852, and a power regenerative converter 2851, which is similar to the vibration test device 1000.

In the tire test device 2000, the servo amplifier 2850, including the inverter 2852, is a drive device that is supplied with energy from a power source and controlled by the control unit C2 to supply driving electric power that causes the servomotor 150 to generate fluctuating torque to the servomotor 150. Furthermore, the power regenerative converter 2851 included in the servo amplifier 2850 supplies energy regenerated from the servomotor 150 when the control unit C2 controls the servo amplifier 2850 (the inverter 2852) to cause the servomotor 150 to generate fluctuating torque, and supplies, among the energy regenerated from the servomotor 150, energy that is not consumed by the servomotor 150 in the acceleration of the servomotor 150 to the power source.

By being configured as described above, the tire test device 2000 can effectively use regenerative energy in various tests conducted by applying fluctuating torque (driving force and braking force) to the tire T, thereby reducing the amount of electric power consumption required for the tests.

### (Third Embodiment)

Next, an example of the application of the present invention to a torsion test device will be described. A torsion test device according to a third embodiment of the present invention described below is a device capable of performing a so-called rotational torsion test in which a specimen is subjected to rotational motion of a predetermined rotation speed and a predetermined torque, and can be used, for example, to test the performance and durability of power transmission devices for automobiles (e.g., clutches, propeller shafts, differential gears, transmissions, and torque converters). For example, it can be used to test the performance and durability of automotive power transmission devices (e.g., clutches, propeller shafts, differential gears, transmissions, torque converters, etc.).

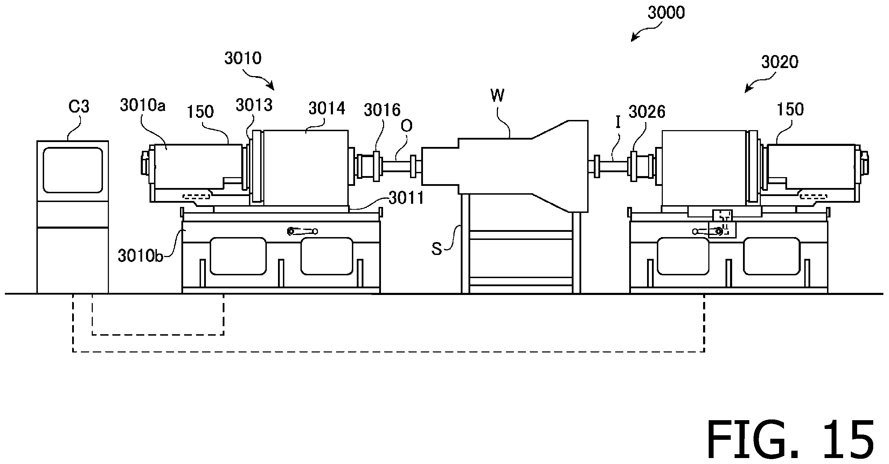

FIG. 15 is a side view of a torsion test device 3000 according to the third embodiment of the present invention. The torsion test device 3000 of the present embodiment is a device capable of performing a rotational torsion test of a specimen W (e.g., transmission unit for FR vehicles) having two rotary shafts. Specifically, the torsion test device 3000 can apply torque to each rotary shaft of the specimen W while rotating the two rotary shafts by applying a phase difference to the rotation of the two rotary shafts of the specimen W while synchronously rotating the two rotary shafts. The torsion test device 3000 of the present embodiment includes a control unit C3 that integrally controls operations of a first drive section 3010, a second drive section 3020, and the torsion test device 3000.

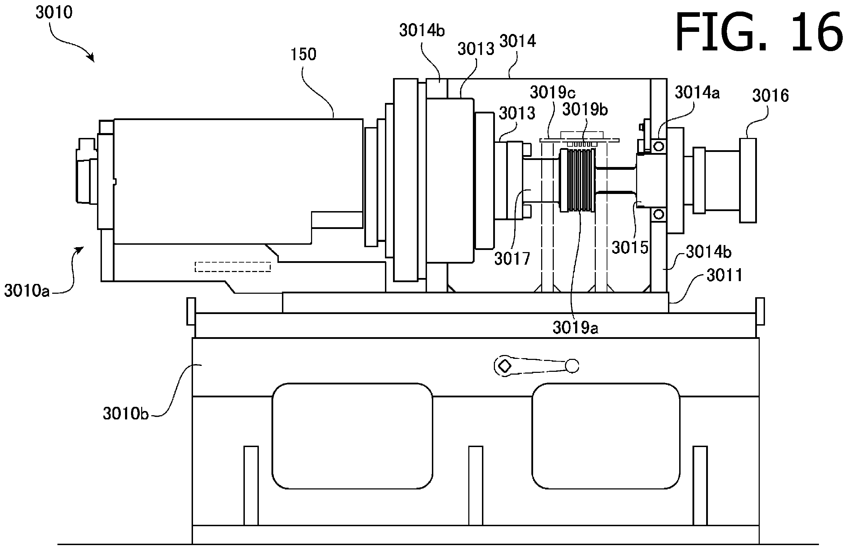

First, a structure of the first drive section 3010 will be described. FIG. 16 is a side view of the first drive section 3010. In FIG. 16, a case 3014 is shown in cross-sectional view to show the structure inside the case 3014. The first drive section 3010 includes a main body 3010a, and a base 3010b that supports the main body 3010a at a predetermined height. The main body 3010a includes the servomotor 150, a reduction gear 3013, the case 3014, a spindle 3015, a chuck device 3016, a torque sensor 3017, slip rings 3019a, and brushes 3019b, and the main body 3010a is assembled on a movable plate 3011 horizontally disposed at the top of the base 3010b. The servomotor 150 is the same as that of the first embodiment. The servomotor 150 is fixed on the movable plate 3011 with an output shaft (not shown) oriented horizontally. The movable plate 3011 of the base 3010b is provided to be slidably movable in a direction of the output shaft of the servomotor 150 (lateral direction in FIG. 15).

An output shaft (not shown) of the servomotor 150 is connected to an input shaft (not shown) of the reduction gear 3013 by a coupling (not shown). The output shaft (not shown) of the reduction gear 3013 is connected to one end of the torque sensor 3017. The other end of the torque sensor 3017 is connected to one end of the spindle 3015. The spindle 3015 is supported to be freely rotatable by a bearing 3014a fixed to a frame 3014b of the case 3014. The chuck device 3016 for attaching one end of the specimen W (one of the rotary shafts) to the first drive section 3010 is fixed to the other end of the spindle 3015. When the servomotor 150 is driven, rotational motion of the output shaft of the servomotor 150 is transmitted to one end of the specimen W via the torque sensor 3017, the spindle 3015, and the chuck device 3016 after being reduced by the reduction gear 3013. That is, the servomotor 150 has a rotary shaft (the output shaft) that is coupled to the specimen W. A rotary encoder (not shown) for detecting an angle of rotation of the spindle 3015 is attached to the spindle 3015.

As shown in FIG. 16, the reduction gear 3013 is fixed to the frame 3014b of the case 3014. The reduction gear 3013 includes a gear case, and a gear mechanism rotatably supported by the gear case via bearings (all of which are not shown). That is, the case 3014 covers a power transmission shaft extending from the reduction gear 3013 to the chuck device 3016 and functions as a device frame that supports this power transmission shaft to be freely rotatable at positions of the reduction gear 3013 and the spindle 3015. That is, the gear mechanism of the reduction gear 3013, to which one end of the torque sensor 3017 is connected, and the spindle 3015, to which the other end of the torque sensor 3017 is connected, are both supported to be freely rotatable on the frame 3014b of the case 3014 via bearings. Therefore, the torque sensor 3017 is not subjected to bending moment due to weight of the gear mechanism of the reduction gear 3013 or the spindle 3015 (and the chuck device 3016), but is subjected only to test load (torsional load), thus enabling the test load to be detected with high accuracy.

A plurality of slip rings 3019a are formed on a cylindrical surface at one end of the torque sensor 3017. On the other hand, a brush holding frame 3019c is fixed to the movable plate 3011 to surround the slip rings 3019a from the outer circumference. A plurality of brushes 3019b are attached to an inner circumference of the brush holding frame 3019c, each of which is in contact with the corresponding slip ring 3019a. When the servomotor 150 is driven and the torque sensor 3017 is rotating, the brushes 3019b slip on the slip rings 3019a while maintaining contact with the slip rings 3019a. An output signal of the torque sensor 3017 is configured to be output to the slip ring 3019a, and the output signal of the torque sensor 3017 can be taken out of the first drive section 3010 via the brushes 3019b that are in contact with the slip rings 3019a.

The second drive section 3020 (FIG. 15) has the same structure as the first drive section 3010, and a chuck device 3026 rotates when the servomotor 150 is driven. The other end of the specimen W (one of the rotary shafts) is fixed to the chuck device 3026. A housing of the specimen W is fixed to a support frame S.

The torsion test device 3000 of the present embodiment is a device that applies a torsional load to the specimen W by synchronously rotationally driving an output shaft O and an input shaft I (engine side) of the specimen W, which is a transmission unit for FR vehicles, fixed to the chuck devices 3016 and 3026 of the first drive section 3010 and second drive section 3020, respectively, with the servomotors 150 and 150, and by making the rotation speed (or phase of rotation) of the two chuck devices 3016 and 3026 differ. For example, the chuck device 3026 of the second drive section 3020 is rotationally driven at a constant speed, and the chuck device 3016 is rotationally driven so that the torque detected by the torque sensor 3017 of the first drive section 3010 fluctuates in accordance with a predetermined waveform, to apply a periodically fluctuating torque to the specimen W, which is a transmission unit.

As described above, the torsion test device 3000 of the present embodiment can precisely drive both the input shaft I and the output shaft O of the transmission unit by means of the servomotors 150 and 150, Therefore, the test can be performed under conditions close to actual driving conditions of automobiles by applying fluctuating torque to each shaft of the transmission unit while rotationally driving the transmission unit.

When performing a rotational torsion test on a device such as a transmission unit in which the input shaft I and the output shaft O are connected via gears or the like, magnitudes of the torques applied to the input shaft I and output shaft O do not necessarily coincide. Therefore, in order to more accurately grasp behavior of the specimen W during the torsion test, it is desirable to be able to measure the torques on the input shaft I side and on the output shaft O side separately. In the present embodiment, since torque sensors are provided in both the first drive section 3010 and the second drive section 3020 as described above, torques can be measured separately on the input shaft I side and the output shaft O side of the transmission unit (specimen W).

In the above example, the input shaft I side of the transmission unit is rotationally driven at a constant speed and torque is applied on the output shaft O side, but the present invention is not limited to the above example. That is, the output shaft O side of the transmission unit may be rotationally driven at a constant speed and fluctuating torque may be applied to the input shaft I side. Alternatively, both the input shaft I side and the output shaft O side of the transmission unit may be respectively rotationally driven at fluctuating rotation speed. Furthermore, only the torque of each shaft may be controlled without controlling the rotation speed. Furthermore, the torque and the rotation speed may be made to fluctuate in accordance with a predetermined waveform. The torque and the rotation speed can be varied in accordance with an arbitrary waveform generated by, for example, a function generator. The torque and the rotation speed of each shaft of the specimen W can also be controlled based on waveform data of the torque and the rotation speed measured in actual running tests.

The torsion test device 3000 of the present embodiment can adjust a distance between the chuck devices 3016 and 3026 to adapt to transmission units of various dimensions. Specifically, the movable plate 3011 of the first drive section 3010 can be moved in a direction of a rotation axis of the chuck device 3016 (left and right in FIG. 15) with respect to the base 3010b by a movable plate drive mechanism (not shown). The movable plate 3011 is firmly fixed to the base 3010b by a not-shown locking mechanism during the rotational torsion test. The second drive section 3020 also has a movable plate drive mechanism of the same configuration as that of the first drive section 3010.

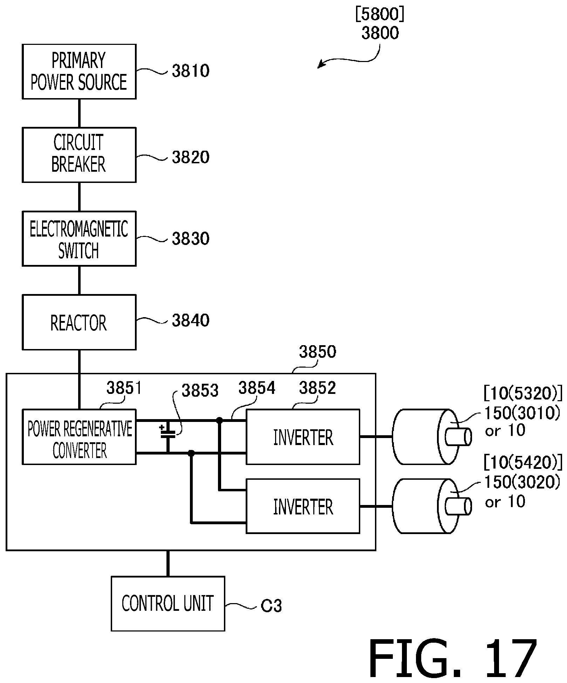

FIG. 17 is a block diagram showing a schematic configuration of an electric power feeding system 3800 according to the third embodiment of the present invention, which supplies electric power to the servomotors 150 of the first drive section 3010 and the second drive section 3020.

The electric power feeding system 3800 of the present embodiment has the same configuration as the electric power feeding system 1800 of the first embodiment, except that the number of inverters 3852 in a servo amplifier 3850 is two.

In one example of tests using the torsion test device 3000, the servomotor 150 of the first drive section 3010 is driven to apply fluctuating torque (e.g., random vibration torque) while rotating the output shaft O of the specimen W at a constant rotation speed. Specifically, the servomotor 150 of the first drive section 3010 is controlled to change the phase of rotation so that the vibration torque is applied to the output shaft O based on predetermined waveform data while rotating at a predetermined rotation speed. That is, since the servomotor 150 of the first drive section 3010 is repeatedly accelerated and decelerated, the supply of driving electric power from the servo amplifier 3850 to the servomotor 150 of the first drive section 3010 and the supply of regenerative electric power from the servomotor 150 of the first drive section 3010 to the servo amplifier 3850 are repeated.

Similarly, the servomotor 150 of the second drive section 3020 is driven to apply fluctuating torque (e.g., random vibration torque) to the input shaft I of the specimen W while rotating the input shaft I at a constant rotation speed. Specifically, the servomotor 150 of the second drive section 3020 is controlled to apply vibration torque to the input shaft I while rotating at a predetermined rotation speed by varying the phase of rotation based on predetermined waveform data. That is, since the servomotor 150 of the second drive section 3020 is repeatedly accelerated and decelerated, the supply of driving electric power from the servo amplifier 3850 to the servomotor 150 of the second drive section 3020 and the supply of regenerative electric power from the servomotor 150 of the second drive section 3020 to the servo amplifier 3850 are repeated.

Most of the regenerative electric power generated by each servomotor 150 is temporarily accumulated in a capacitor 3853 and then reused to drive the servomotors 150 in the first drive section 3010 and the second drive section 3020. Therefore, the electric power consumption from a primary power source 3810 used to drive the servomotors 150 is slightly reduced. The surplus of the regenerative electric power is converted into sinusoidal alternating current by a power regenerative converter 3851 and output to the primary power source via a reactor 3840, an electromagnetic switch 3830 and a circuit breaker 1820.

The torsion test device 3000 includes an electric actuator that provides the specimen W with rotational motion of predetermined rotation speed and torque, and a control unit C3. As shown in FIG. 17, the electric actuator of the torsion test device 3000 includes the servomotor 150, inverters (the inverters 3852), and a power regenerative converter (the power regenerative converter 3851), which is similar to the vibration test device 1000.

In the torsion test device 3000, the servo amplifier 3850, including the inverters 3852, is a drive device that is supplied with energy from a power source and controlled by the control unit C3 to supply driving electric power for causing the servomotor 150 to generate fluctuating torque to the servomotors 150. Furthermore, the power regenerative converter 3851 regenerates, among the energy regenerated from the servomotors 150, energy that is not consumed by the acceleration of the servomotors 150 when the control unit C3 controls the servo amplifier 3850 (the inverters 3852) to generate fluctuating torque in the servomotors 150 to the power source.

By being configured as described above, the torsion test device 3000 can effectively use the regenerative energy in the torsion test performed by applying fluctuating torque (rotational motion of predetermined rotation speed and torque) to the specimen W, thereby reducing electric power consumption for the test.

The torsion test device 3000 according to the third embodiment of the present invention described above performs rotational torsion tests on a transmission units for FR vehicles, but the present invention is not limited to the configuration of the basic example of the third embodiment described above, and devices for performing rotational torsion tests on other power transmission mechanisms are also included in the present invention.

### (Fourth Embodiment)

Next, an example of the application of the present invention to a tensile and compression test device will be described. A tensile and compression test device 4000 according to a fourth embodiment of the present invention described below is a device capable of performing fatigue tests in which tensile or compressive force is repeatedly applied to a specimen.

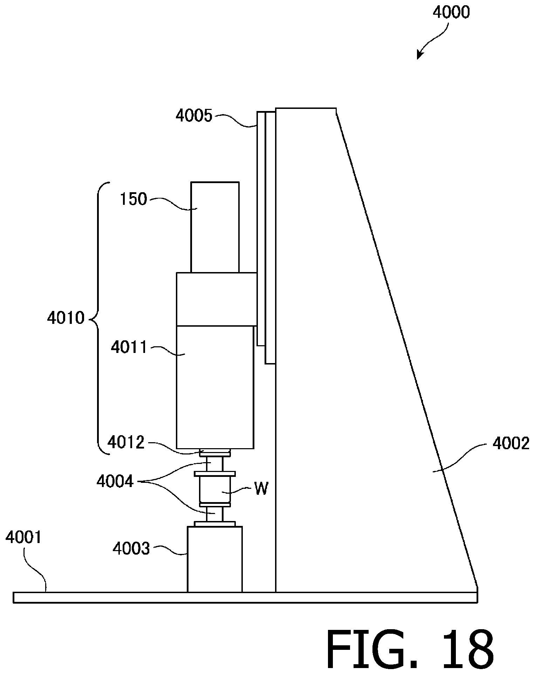

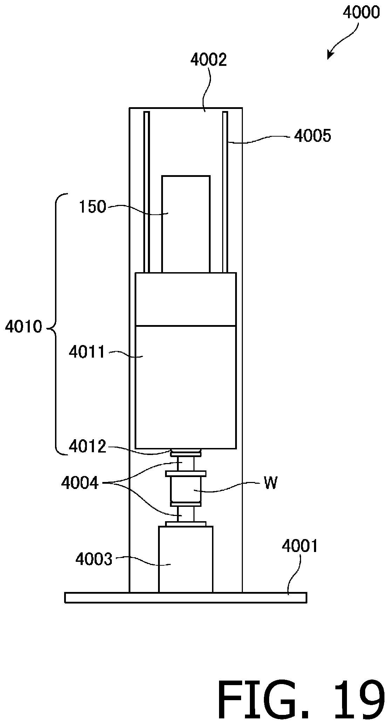

FIG. 18 is a side view of the tensile and compression test device 4000 according to the fourth embodiment of the present invention. FIG. 19 is a front view of the tensile and compression test device 4000 according to the fourth embodiment.

The tensile and compression test device 4000 includes a frame 4001 to be fixed to a horizontal surface, a support 4002 and a pedestal 4003 fixed to the frame 4001, and an electric actuator 4010. The electric actuator 4010 is fixed to the support 4002, which is erected from the top surface of the frame 4001.

The pedestal 4003 is fixed to the frame 4001 vertically under the electric actuator 4010 fixed to the support 4002. A holding member 4004 that holds a specimen W is fixed to the pedestal 4003. Specific configuration of the holding member 4004 is not limited a specific one, as long as tensile or compressive force can be applied to the specimen W via the holding member 4004.

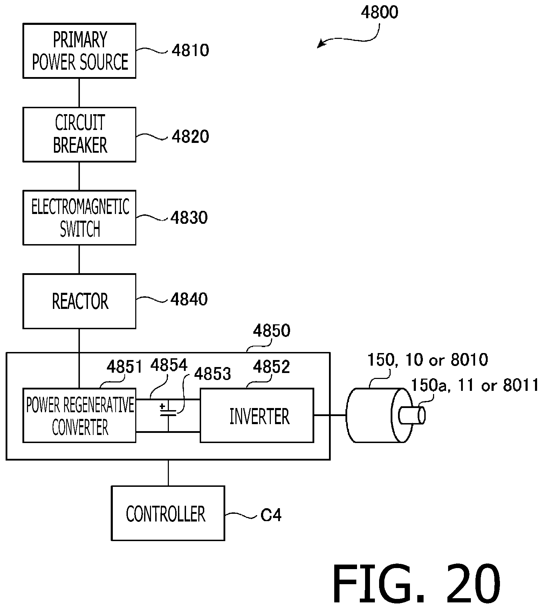

The electric actuator 4010 includes the servomotor 150, which is an electric motor of which rotation can be switched between forward and reverse rotations, a ball screw section 4011 that converts the rotational motion of the servomotor 150 into linear motion, a piston 4012 attached to a distal end (nut) of the ball screw section 4011, and a later-described servo amplifier 4850 (see FIG. 20). The ball screw section 4011 is an example of a motion converter that outputs a reciprocating linear motion in response to forward and reverse rotations of the servomotor 150. The piston 4012 is an example of a movable part that receives the reciprocating linear motion of the ball screw section 4011 and transmits compression or tension force to the specimen W.

A height at which the electric actuator 4010 is fixed to the support 4002 can be adjusted with a lifting and lowering mechanism 4005 provided between the electric actuator 4010 and the support 4002. The height of the electric actuator 4010 is adjusted with the lifting and lowering mechanism 4005 so that, for example, the piston 4012 contacts an upper surface of the holding member 4004 holding the specimen W as shown in FIG. 18. The piston 4012 and the holding member 4004 are then fixed.

In the tensile and compression test device 4000 configured as described above, as in the first embodiment, by driving the servomotor 150 to rotate back and forth, the piston 4012 performs a reciprocating linear motion, and as a result, compression and tensile forces can be repeatedly applied to the specimen W.

FIG. 20 is a block diagram showing a schematic configuration of an electric power feeding system 4800 according to the fourth embodiment of the present invention, which supplies electric power to the servomotor 150 of the electric actuator 4010.

The electric power feeding system 4800 of the present embodiment has the same configuration as the electric power feeding system 1800 of the first embodiment, except that the number of inverters 4852 in the servo amplifier 4850 is one. The electric actuator 4010 is controlled by a controller C4.

In the tensile and compression test device 4000, the servo amplifier 4850, including the inverter 4852, is a drive device that is supplied with energy from a power source and is controlled by the controller C4 to supply, to the servomotor 150, driving electric power that causes the ball screw section 4011 to linearly move back and forth at desired amplitude and frequency. Furthermore, a power regenerative converter 4851 regenerates, among the energy regenerated from the servomotor 150, energy that is not consumed by the acceleration of the servomotor 150 to the power source when the controller C4 controls the servo amplifier 4850 (the inverter 4852) to cause the ball screw section 4011 to linearly move back and forth at desired amplitude and frequency.

By being configured as described above, the tensile and compression test device 4000 can effectively use the regenerative energy in tensile and compression tests in which tensile or compressive force is repeatedly applied to the specimen W, thereby reducing the amount of electric power consumption required for the test.

### (Fifth Embodiment)

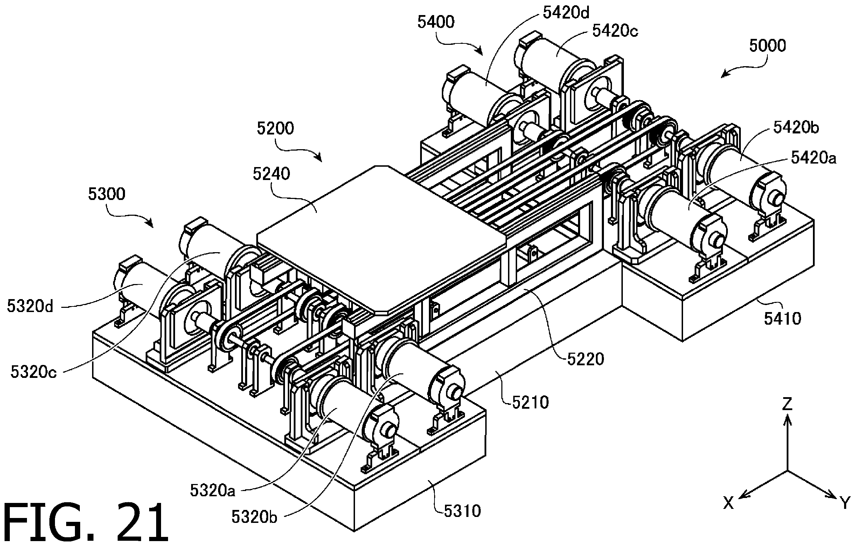

FIG. 21 is a perspective view of a collision simulation test device 5000 according to a fifth embodiment of the present invention. The collision simulation test device 5000 is a device capable of reproducing impacts acting on transportation machinery such as automobiles and the like (including railcars, aircraft, and ships), passengers, and equipment of automobiles and the like during collision of the transportation machinery.

The collision simulation test device 5000 includes a table 5240 that resembles the frame of an automobile vehicle. On the table 5240, a specimen such as, for example, a seat with an occupant dummy on it or a high-voltage battery for an electric vehicle are mounted. That is, the table 5240 is an example of an attachment part to which the specimen is to be attached. When the table 5240 is driven at a set acceleration (e.g., an acceleration equivalent to an impact acting on the frame of the vehicle during a collision), the specimen attached to the table 5240 is subjected to an impact similar to that of an actual collision. Damage on the specimen at this time (or damage predicted from the measurement results of acceleration sensors or the attached to the specimen) is used to evaluate safety of occupants.

The collision simulation test device 5000 of the present embodiment is configured to allow the table 5240 to be driven only in one horizontal direction. As shown in FIG. 21 with coordinate axes, the movable direction of the table 5240 is defined as an X-axis direction, a horizontal direction perpendicular to the X-axis direction is defined as a Y-axis direction, and a vertical direction is defined as a Z-axis direction. Based on the direction of travel of the vehicle being simulated, the X-axis positive direction is referred to as front, the X-axis negative direction is referred to as rear, the Y-axis negative direction is referred to as right, and the Y-axis positive direction is referred to as left. The X-axis direction in which the table 5240 is driven is referred to as a "drive direction." In the collision simulation test, a large acceleration in a direction opposite to the travelling direction of the vehicle (i.e., backward) is applied to the table 5240.

The collision simulation test device 5000 has a test section 5200 including the table 5240, a front drive section 5300 and a rear drive section 5400 that drive the table 5240, four belt mechanisms 5100 (belt mechanisms 5100a, 5100b, 5100c, and 5100d) that convert rotational motion generated by each drive unit 5300, 5400 into translational motion in the X-axis direction and transmit the translational motion to the table 5240, and a control unit C3. Each of the four belt mechanisms 5100 is an example of a transmission mechanism that converts unidirectional rotary motion output by each of the drive sections 5300 and 5400 into linear motion and transmits the linear motion to the table 5240 which is the attachment part.

The test section 5200 is disposed at the center of the collision simulation test device 5000 in the X-axis direction, and the front drive section 5300 and the rear drive section 5400 are disposed adjacent to the front and rear of the test section 5200, respectively.

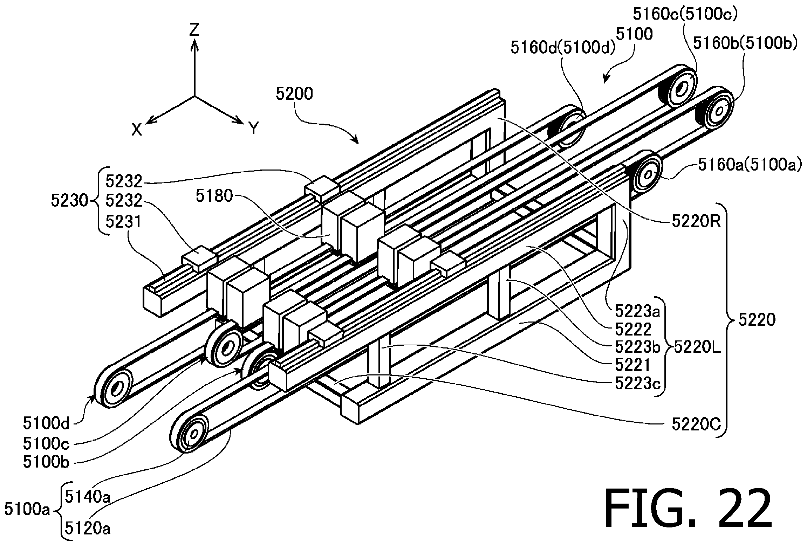

FIG. 22 is a perspective view showing a structure of the test section 5200 and the belt mechanism 5100. For convenience of explanation, the table 5240 and a base block 5210 (described later), which are components of the test section 5200, are omitted in FIG. 22.

In addition to the table 5240, the test section 5200 includes the base block 5210 (FIG. 21), a frame 5220 attached on the base block 5210, and a pair of linear guides 5230 (guideway-type circulating linear bearings) attached on the frame 5220. The table 5240 is supported by the pair of linear guides 5230 to be movable only in the X-axis direction (drive direction).

As shown in FIG. 22, the frame 5220 has a pair of left and right half-frames (right frame 5220R and left frame 5220L) connected by a plurality of connecting bars 5220C extending in the Y-axis direction. Since the right frame 5220R and the left frame 5220L have the same structure (more precisely, mirror image relationship), only the left frame 5220L will be described in detail.

The left frame 5220L has an attachment part 5221 and a rail support part 5222 each extending in the X-axis direction, and three connecting parts 5223 (5223a, 5223b, 5223c) extending in the Z-axis direction that connect the attachment part 5221 to the rail support part 5222. As shown in FIG. 21, the attachment part 5221 has its length substantially equal to a length of the base block 5210 in the X-axis direction and is supported in its entire length by the base block 5210. Rear ends of the attachment part 5221 and the rail support part 5222 are connected to each other by the connecting part 5223a.

The rail support part 5222 is longer than the attachment part 5221 (i.e., longer than the base block 5210), and a distal end portion of the rail support part 5222 protrudes forward of the base block 5210 and is located above the front drive section 5300.

The linear guide 5230 includes a rail 5231 extending in the X-axis direction, and two carriages 5232 that travel on the rail 5231 via rolling elements. The rails 5231 of the pair of linear guides 5230 are fixed to the top surfaces of the rail support parts 5222 of the right frame 5220R and the left frame 5220L, respectively. A length of the rail 5231 is substantially equal to the length of the rail support part 5222, and the entire length of the rail 5231 is supported by the rail support part 5222. A plurality of attachment holes (screw holes) are provided on top surfaces of the carriages 5232, and the table 5240 has a plurality of through holes corresponding to the attachment holes of the carriages 5232. The carriages 5232 are fastened to the table 5240 by fitting bolts (not shown) inserted into the through-holes of the table 5240 into respective attachment holes of the carriages 5232. The table 5240 and the four carriages 5232 constitute a cart (thread).

The table 5240 is formed with an attachment structure such as screw holes for attaching a specimen (not shown) such as a seat, so that the specimen can be directly attached to the table 5240. This eliminates the need for a member such as an attachment plate for attaching the specimen, thereby reducing weight of a movable part to which an impact is to be applied and enabling impacts with high fidelity up to high frequency components to be applied to the specimen.

As shown in FIG. 22, each belt mechanism 5100 includes a toothed belt 5120, a pair of toothed pulleys (a first pulley 5140 and a second pulley 5160) around which the toothed belt 5120 is wound, and a pair of belt clamps 5180 for securing the toothed belt 5120 to the table 5240.

Four toothed belts 5120 are arranged in parallel between the right frame 5220R and the left frame 5220L. The toothed belts 5120 are secured to the table 5240 by the belt clamps 5180 at two points along their lengths, respectively.

As shown in FIG. 21, the front drive section 5300 includes a base block 5310 and four electric actuators 5320 (5320a, 5320b, 5320c, 5320d) installed on the base block 5310. The rear drive section 5400 includes a base block 5410 and four electric actuators 5420 (5420a, 5420b, 5420c, 5420d) installed on the base block 5410. Basic configurations of the eight electric actuators are the same, although there are slight differences in positions and orientations of their installation, and lengths and spacings of their components. Basic configurations of the front drive section 5300 and the rear drive section 5400 are also the same.

Based on an input acceleration waveform, the control unit C3 synchronously controls driving of the motor 10 of the electric actuator 5320a-d and 5420a-d to provide acceleration to the table 5240 according to the above acceleration waveform. In the present embodiment, all the eight servomotors are respectively driven to rotate back and forth in the same phase.

In the present embodiment, by using a later-described electric actuator 100 that outputs unidirectional rotary motion as the electric actuators 5420, the toothed pulley can be rotated while utilizing regenerative energy. This makes it possible to accelerate the table 5240 and perform collision simulation tests while reducing electric power consumption.

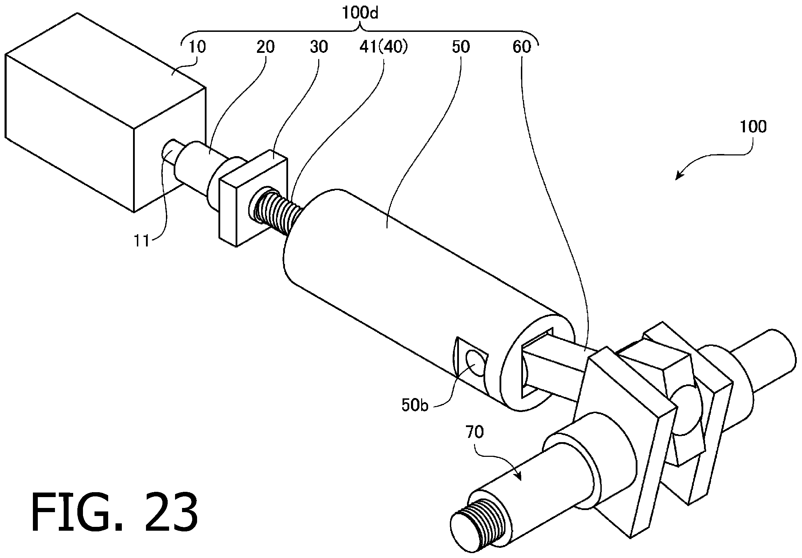

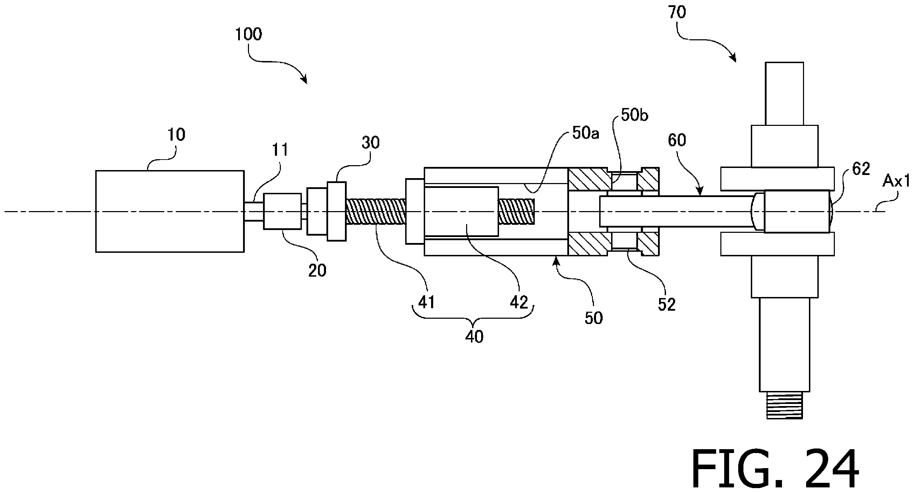

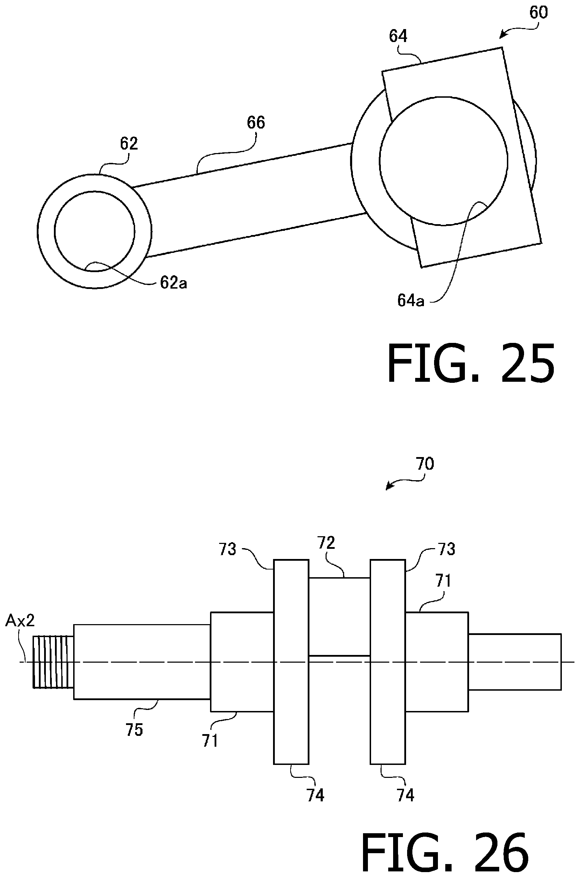

FIG. 23 is a perspective view showing a schematic structure of the electric actuator 100. FIG. 24 is a plan view showing the schematic structure of the electric actuator 100. FIG. 25 is a side view of a connecting rod 60 included in the electric actuator 100. FIG. 26 is a side view of a crankshaft 70 included in the electric actuator 100.

As shown in FIG. 23, the electric actuator 100 includes a drive unit 100d and the crankshaft 70.

The drive unit 100d includes the motor 10 (electric motor), a bearing 30, a ball screw 40 (feed screw mechanism), a linear motion section 50 (hereinafter referred to as "piston 50"), and the connecting rod 60.

The motor 10 is, for example, an ultra-low inertia and high output type AC servomotor. The use of such ultra-low inertia and high output type motor 10 enables to drive the motor 10 to rotate back and forth at high frequencies of, for example, 100 Hz or higher.

A screw shaft 41 of the ball screw 40 is rotatably supported by the bearing 30 fixed to the base block 5410 or 5310. The screw shaft 41 is connected to a shaft 11 of the motor 10 by a shaft coupling 20.

The piston 50 is a cylindrical member to which a hollow portion 50a extending in the direction of an axis line Ax1 is formed. The axis line Ax1 is a center line of the drive unit 100d and is a straight line common to axes of rotation of the motor 10 and the ball screw 40. A nut 42 of the ball screw 40 is for example housed in one end portion of the hollow portion 50a of the piston 50 (left end portion in FIG. 24) and is fixed to the piston 50.

At the other end portion of the piston 50 (right end in FIG. 24), a pin 52 is attached perpendicular to an axis of the piston 50 (in other words, parallel to the crankshaft 70).

FIG. 25 is a side view of the connecting rod 60. The connecting rod 60 has a small end part 62 to which a small diameter pin hole 62a is formed, a large end part 64 to which a large diameter pin hole 64a is formed, and a rod part 66 connecting the small end part 62 and the large end part 64. The pin holes 62a and 64a are formed parallel to each other.

The pin 52 is inserted into the pin hole 62a of the small end part 62, for example via a bush (not shown). Both ends of the pin 52 are inserted into a pair of pin holes 50b (FIG. 24) formed to the other end portion of the piston 50 and fixed to the piston 50. As a result, the connecting rod 60 is connected to the other end portion of the piston 50 via the pin 52 at the small end part 62 to be rotatable within a certain angular range with the pin 52 as the central axis of rotation. In addition to the pin 52 (first pin), the connecting rod 60 is rotatably connected to a crank pin 72 (second pin) which will be described later.

FIG. 26 shows a side view of the crankshaft 70. The crankshaft 70 has a pair of crank journals 71 coaxially disposed (i.e., axes of rotation or centerlines are coincident), a crank pin 72 disposed eccentrically with respect to axis lines of the crank journals 71 (i.e., axis Ax2 which is an axis of rotation of the crankshaft 70), a pair of crank arms 73 connecting the crank journals 71 and the crank pin 72, a pair of balance weights 74 disposed on opposite sides of respective crank arms 73 with respect to the axis line Ax2, and an output shaft 75 coaxially coupled to one of the crank journals 71. The balance weights 74 are formed to counteract imbalances created by the crank pin 72 and the crank arms 73, which are eccentric with respect to the axis line Ax2.

The crankshaft 70 is rotatably supported by not-shown pair of bearings (e.g., rolling bearings) fixed to the base block 5410 or 5310 at the pair of crank journals 71.

The crank pin 72 is inserted into the pin hole 64a of the large end part 64 of the connecting rod 60, for example, via a bush (not shown). The crankshaft 70 is thus rotatably connected to the connecting rod 60.

For example, oilless bushes are used as the bushes that engage with the pin holes 62a and 64a of the connecting rod 60. Other types of bearings, such as rolling bearings, may be used in place of the bushes.

The motor 10 is an electric motor of which rotation can be switched between forward and reverse rotations, and drives the shaft 11 to repeatedly rotate back and forth within a predetermined angular range. The rotation of the motor 10 is converted into linear motion by the ball screw 40 and transmitted to the piston 50. As a result, the piston 50 moves in a reciprocating linear motion along the axis line Ax1 with a predetermined stroke. That is, the ball screw 40 functions as a first motion converter that converts the reciprocating rotary motion of the motor 10 into the reciprocating linear motion.

The reciprocating linear motion of the piston 50 in the direction of the axis line Ax1 is transmitted by the connecting rod 60 to the eccentric crank pin 72 of the crankshaft 70 and converted into rotary motion of the crankshaft 70. That is, the connecting rod 60 and the crankshaft 70 (as well as the pin 52 rotatably supporting the connecting rod 60 and the not-shown bearings rotatably supporting the crankshaft 70) configures a crank mechanism (more specifically, a slider crank mechanism) as a second motion converter that converts the reciprocating motion (reciprocating linear motion) into a unidirectional rotary motion (hereinafter referred to as "unidirectional rotary motion").

As described above, the electric actuator 100 includes the motion converter that converts the forward and reverse rotations of the motor 10 into the unidirectional rotary motion, which consists of the ball screw 40, the piston 50, the connecting rod 60, and the crankshaft 70.

An electric power feeding system 5800 according to the fifth embodiment of the present invention, which supplies electric power to the servomotors 10 of the electric actuators 100, has the same configuration as the electric power feeding system 3800 shown in FIG. 17, except that the number of inverters 3852 is eight. The electric actuators 100 are controlled by the control unit C3 shown in FIG. 17.

In the collision simulation test device 5000, the servo amplifier 3850, including the inverters 3852, is a drive device that is supplied with energy from the power source and controlled by the control unit C3 to supply driving electric power to the motors 10 to give the table 5240 the desired acceleration. Furthermore, the power regenerative converter 3851 regenerates, among the energy regenerated from the motors 10, energy that is not consumed by the acceleration of the motors 10 when the control unit C3 controls the servo amplifier 3850 (the inverters 3852) to give the desired acceleration to the table 5240 to the power source.

By being configured as described above, the collision simulation test device 5000 can effectively use regenerative energy in a collision simulation test in which the specimen is given a desired acceleration to subject to an impact similar to that of an actual collision, thereby reducing the amount of electric power consumption required for the test.

The collision simulation test device 5000 of the present embodiment can also be used as an impact test device for evaluating durability and reliability against impact by applying strong impact waves to products and parts. The collision simulation test device 5000 of the present embodiment can also be used as a vibration test device that applies vibration to products and parts.

In the present embodiment, the electric actuator 100 is used for the electric actuators 5320 of the front drive section 5300 and the electric actuators 5420 of the rear drive section 5400, but the motor 10 may be used individually in place of the electric actuator 100. In particular, when the collision simulation test device 5000 of the present embodiment is used as a vibration test device, since acceleration and deceleration are repeated in a short cycle, the regenerative electric power accumulated in the capacitor 3853 is efficiently reused by the motor 10, and thus electric power consumption for the test can be reduced.

### (Sixth Embodiment)

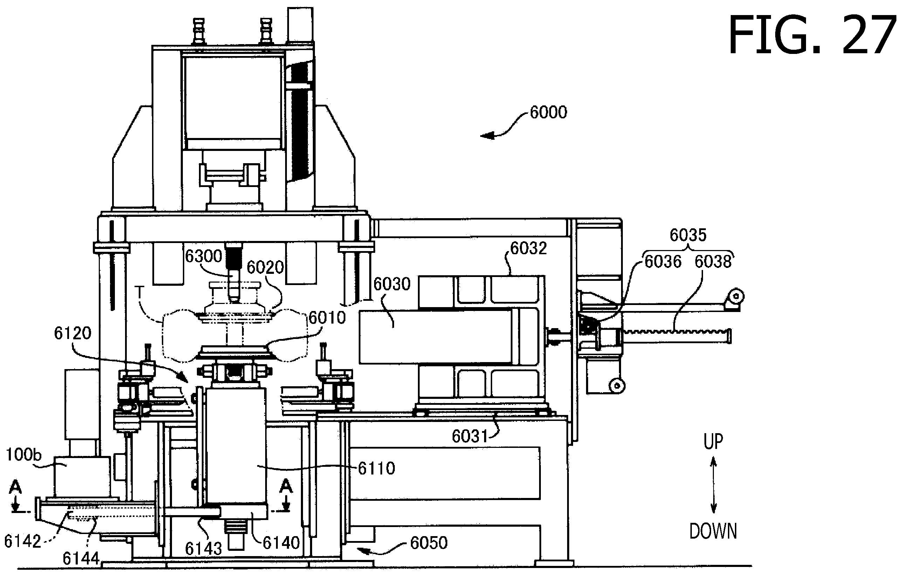

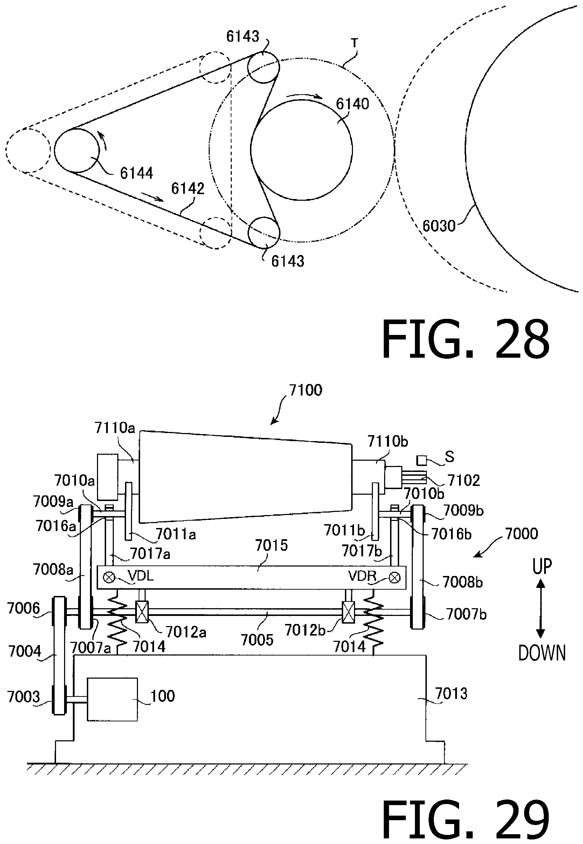

A multi-test device according to a twelfth embodiment of the present invention described below is a test device capable of performing uniformity and dynamic balancing tests on tires. FIG. 27 is a side view showing a basic configuration of a uniformity and dynamic balance multi-test device 6000 (hereinafter referred to as a multi-test device 6000) of an embodiment of the present invention. FIG. 28 schematically shows a method for rotationally driving a spindle 6120 of the multi-test device 6000.

As shown in FIG. 27, the multi-test device 6000 is configured to hold a tire T between a lower rim 6010 and an upper rim 6020 from the top and bottom. More specifically, the multi-test device 6000 nips and holds the tire T between the lower rim 6010 and the upper rim 6020 by inserting a locking shaft 6300, to which the upper rim 6020 is fixed at the upper end, into the spindle 6120 and securing the locking shaft 6300.

In the uniformity test, a rotating drum 6030 provided on a side of spindle 6120. The rotating drum 6030 is an example of a rotating drum in contact with the tire. The rotating drum 6030 is mounted on a movable housing 6032 that can slide on rails 6031 extending in a direction to get closer to and moving away from the tire T, and moves in the direction to get closer to and moving away from the tire T by a rack and pinion mechanism 6035 (a pinion 6036 and a rack 6038) driven by a not-shown motor. The rotating drum 6030 moves in the direction of proximity/detachment to the tire T. The rotating drum 6030 can be rotated at any desired rotation speed by a not-shown electric actuator (hereinafter referred to as "electric actuator 100a"). A configuration of the electric actuator 100a is the same as the electric actuator 100 described above in the fifth embodiment.

When conducting the uniformity test, the rotating drum 6030 is brought into contact with the tire T with the rack and pinion mechanism 6035, and the rotating drum 6030 is then pressed against the tire T with a force of several hundred kgf or more. Then, in this state, the rotating drum 6030 is rotated (thus the tire T in contact with the rotating drum 6030 also rotates with the rotating drum 6030), and variation in force occurring on the rotating tire due to load fluctuation occurring at that time is measured with a triaxial piezoelectric element installed on a side surface of a spindle housing 6110.

In the present embodiment, this rotating drum 6030 is rotated using the electric actuator 100a. More specifically, the multi-test device 6000 has an electric power feeding system that has the same configuration as the electric power feeding system 3800 shown in FIG. 17, where the control unit C3 controls the electric actuator 100a, and the electric actuator 100a causes the rotating drum 6030 to perform a unidirectional rotational motion. This allows the rotating drum 6030 to rotate while utilizing the regenerative energy to perform the uniformity test.

On the other hand, the dynamic balancing test is a test in which the tire T is rotated together with the spindle 6120 in a state where the rotating drum 6030 is separated from the tire T, and measuring eccentricity of the tire from excitation force generated by unbalance of the tire T at that time. The spindle 6120 is an example of a spindle to which a tire is to be attached.

At a lower end of spindle 6120, a pulley 6140 for rotationally driving the spindle 6120 the during dynamic balancing test is attached. An electric actuator 100b, which can move horizontally toward the spindle 6120 by means of a not-shown rack and pinion mechanism, is installed on a base 6050 to which the spindle 6120 is fixed, and the spindle 6120 is rotated by the electric actuator 100b. A configuration of the electric actuator 100b is the same as the electric actuator 100 described above in the fifth embodiment. This allows the spindle 6120 to rotate while utilizing the regenerative energy to perform the dynamic balancing test.

A drive pulley 6144 is attached to an output rotary shaft of the electric actuator 100b at the same height as the pulley 6140 of the spindle 6120. As shown in FIG. 28, a pair of driven pulleys 6143 are rotatably installed at the same height as the drive pulley 6144 and the pulley 6140 of the spindle 6120. The driven pulleys 6143 move back and forth together with the electric actuator 100b (the drive pulley 6144) by the above-mentioned not-shown rack and pinion mechanism. An endless belt 6142 is tacked across the drive pulley 6144 and the driven pulley 6143, and the belt 6142can be made to advance at a predetermined speed with the electric actuator 100.

By driving the electric actuator 100b in the state where the endless belt 6142 is in contact with the pulley 6140 (a state shown with a solid line in FIG. 28) by the rack-and-pinion mechanism, the pulley 6140 rotates and the spindle 6120 rotates with the tire T held between the lower rim 6010 and the upper rim 6020. At this time, the excitation force is measured by the triaxial piezoelectric element installed on the side surface of the spindle housing 6110. The configuration between the electric actuator 100b and the spindle 6120 (the pulley 6140, the drive pulley 6144, the driven pulleys 6143, and the endless belt 6142) is an example of a transmission mechanism that transmits the unidirectional rotary motion output by the electric actuator 100b to the spindle 6120 .

As described above, the multi-test device 6000 has the electric power feeding system of the same configuration as the electric power feeding system 3800 shown in FIG. 17. The control unit C3 controls the electric actuator 100b, and the transmission mechanism transmits the unidirectional rotary motion output by the electric actuator 100b to the spindle 6120. This allows the spindle 6120 to rotate while utilizing the regenerative energy to perform the dynamic balancing tests.

As described above, the multi-test device 6000 is provided with two electric actuators 100a and 100b having the same configuration as the electric actuator 100 of the fifth embodiment, with the electric actuator 100a used to rotate the rotating drum 6030 and the electric actuator 100b used to rotate the spindle 6120 is used to rotate the spindle. This allows the tests to be conducted while utilizing the regenerative energy in both the uniformity and dynamic balancing tests.

More specifically, in the multi-test device 6000, the servo amplifier 3850, including the inverters 3852, is a drive device that is supplied with energy from the power source and controlled by the control unit C3 to supply driving electric power to the motors 10 to cause the rotating drum 6030 to rotate at a predetermined speed. The power regenerative converter 3851 regenerates, among the energy regenerated from the motor 10, energy that is not consumed by the acceleration of the motor 10 when the control unit C3 controls the servo amplifier 3850 (the inverter 3852) to rotate the rotating drum 6030 at the predetermined speed to the power source. Furthermore, the servo amplifier 3850, including the inverters 3852, is also a drive device that is supplied with energy from the power source and controlled by the control unit C3 to supply driving electric power to the motor 10 to rotate the spindle 6120 at a predetermined speed. The power regenerative converter 3851 regenerates, among the energy regenerated from the motor 10, energy that is not consumed by the acceleration of the motor 10 when the control unit C3 controls the servo amplifier 3850 (the inverter 3852) to rotate the spindle 6120 at the predetermined speed to the power source.

By being configured as described above, the multi-test device 6000 can effectively use the regenerative energy in the tire uniformity and dynamic balancing tests, thereby reducing the amount of electric power consumption required for the tests.

### (Seventh Embodiment)

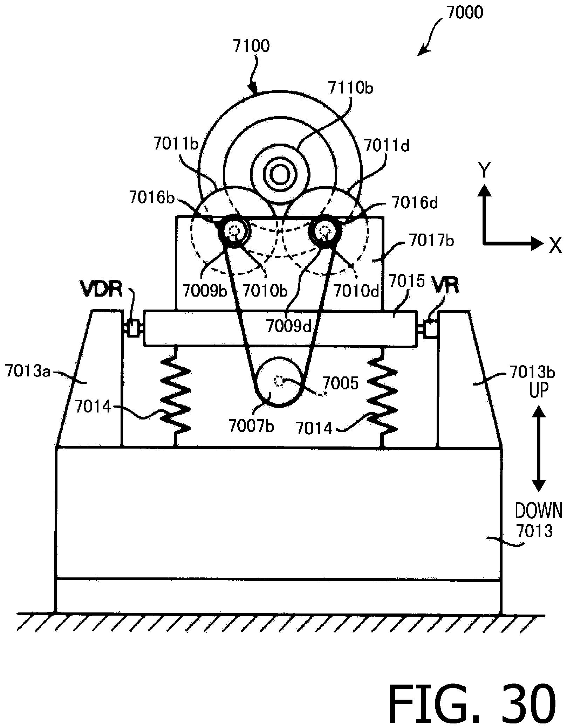

A balance measurement device 7000 according to a seventh embodiment of the present invention described below is a test device capable of measuring balance of a rotating body. FIGS. 29 and 30 are a front view and a side view, respectively, of the balance measurement device 7000 according to the embodiment of the present invention. In the following description, a vertical direction in FIG. 29 is defined as a Y-axis direction, and a direction perpendicular to both the vertical direction and a rotational axis direction of the rotating body is defined as an X-axis direction. A rotating body 7100 of the present embodiment is, for example, a crankshaft, and the balance measurement device 7000 is, for example, a device capable of measuring balance of the crankshaft.

A device frame of the balance measurement device 7000 consists of a base 7013, a plurality of springs 7014 extending vertically upward from the base 7013, and a table 7015 supported by the springs 7014. Drive shaft bearings 7012a and 7012b are attached to a lower surface of the table 7015. A drive shaft 7005 is rotatably supported by the drive shaft bearings 7012a and 7012b. As shown in FIG. 30, a first side wall 7013a and a second side wall 7013b, which can be regarded as almost rigid, extend vertically upward from both ends of the base 7013 in the X-axis direction.

The electric actuator 100 according to the first embodiment that outputs unidirectional rotary motion is attached to the base 7013. A pulley 7003 is attached to a drive shaft of the electric actuator 100. On the other hand, a first pulley 7006 is attached to one end of the drive shaft 7005, and a first endless belt 7004 is tacked across this first pulley 7006 and the pulley 7003 attached to the drive shaft of the electric actuator 100. By driving the electric actuator 100, the drive shaft 7005 can be driven to rotate via the first endless belt 7004.

A first table side wall 7017a and the second table side wall 7017b that are parallel to each other are fixed vertically above a top surface of the table 7015. The first table side wall 7017a and the second table side wall 7017b are rigid bodies having extremely high rigidity compared to a spring constant of the springs 7014. Driven shaft bearings 7016a and 7016c are fixed to the first table side wall 7017a, and driven shaft bearings 7016b and 7016d are fixed to the second table side wall 7017b. Only the driven shaft bearings 7016a and 7016b are shown in FIG. 29, while the driven shaft bearings 7016c and 7016d are disposed on the far side of the driven shaft bearings 7016a and 7016b in FIG. 29, respectively. The driven shaft bearings 7016a, 7016b, 7016c, and 7016d rotatably support driven shafts 7010a, 7010b, 7010c, and 7010d (only 7010a and 7010b are shown in FIG. 29), respectively.

Pulleys 7009a, 7009b, 7009c, and 7009d are attached to one end of the driven shafts 7010a, 7010b, 7010c, and 7010d, respectively. Second pulleys 7007a and 7007b are attached to one end of the drive shaft 7005 adjacent to the pulley 7006 and to the other end of drive shaft 7005. Across the second pulley 7007a, the pulley 7009a attached to the driven shaft 7010a and the pulley 7009c attached to the driven shaft 7010c, and across the second pulley 7007b, the pulley 7009b attached to the driven shaft 7010b and the pulley 7009d attached to the driven shaft 7010d, endless belts 7008a and 7008b are tacked, respectively. Therefore, when the drive shaft 7005 rotates, the power is transmitted to the driven shafts 7010a and 7010c via the second endless belt 7008a, and as a result, the driven shafts 7010a and 7010c rotate. The power from the drive shaft 7005 is also transmitted to the driven shafts 7010b and 7010d via the second endless belt 7008b, and as a result, the driven shafts 7010b and 7010d also rotate.

Rollers 7011a, 7011b, 7011c, and 7011d are attached to the other ends of the driven shafts 7010a, 7010b, 7010c, and 7010d, respectively. One end 7110a of a rotary shaft of the rotating body 7100 is placed on the rollers 7011a and 7011c, and the other end 7110b of the rotary shaft of the rotating body 7100 is placed on the rollers 7011b and 7011d, respectively. The rotating body 7100 rotates in accordance with rotation of these rollers 7011a, 7011b, 7011c, and 7011d. That is, the rotating body 7100 can be rotated while utilizing regenerative energy by driving the electric actuator 100.

The configuration (the shafts, the pulleys, the rollers, and the belts) between the electric actuator 100 and the rotating body 7100 is an example of a transmission mechanism that transmits the unidirectional rotational motion output by the electric actuator 100 to the rotating body 7100 which is a specimen.

A keyway 7102 is formed at the other end 7110b of the rotating body 7100. A sensor S for detecting the keyway 7102 is further disposed on the balance measurement device 7000.

Furthermore, as shown in FIGS. 29 and 30, vibration pickups VDL and VDR are attached between the first side wall 7013a of the base 7013 and the table 7015. The rotating body 7100, which is a crankshaft with dynamic imbalance, vibrates as it rotates. In the balance measurement device of the present embodiment, the vibration of the rotating body 7100 (crankshaft) is transmitted to the table 7015 via the rollers 7011a, 7011b, 7011c and 7011d, first and second table side walls 7017a, 7017b, and the like. The vibration pickups VDL and VDR detect the vibration transmitted from the rotating body 7100 (crankshaft) to the table 7015. In other words, the vibration pickups VDL and VDR detect fluctuation in the load applied by the rotating body 7100 (crankshaft) to the rollers 7011a, 7011b, 7011c and 7011d.

The vibration pickups VDL and VDR are acceleration sensors capable of measuring acceleration in two components (in the X-axis and Y-axis directions) perpendicular to the rotary shaft of the rotating body 7100, respectively. The vibration pickup VDL is attached on the same XY plane as the first table side wall 7017a, and the vibration pickup VDR is attached on the same XY plane as the second table side wall 7017b.

Piezoelectric actuators VL and VR are attached between the second side wall 7013b of the base 7013 and the table 7015. The piezoelectric actuator VL is attached on the same XY plane as the first table side wall 7017a, and the piezoelectric actuator VR is attached on the same XY plane as the second table side wall 7017b. The piezoelectric actuators are members that can expand and contract according to the magnitude of the applied voltage to displace an object being in contact with the piezoelectric actuators, and thus the table 7015 can be freely vibrated by controlling signals to be input to the piezoelectric actuators VL and VR.

The balance measurement device 7000 has an electric power feeding system having the same configuration as the electric power feeding system 4800 shown in FIG. 20. The controller C4 controls the electric actuator 100, and the transmission mechanism transmits the unidirectional rotational motion output by the electric actuator 100 to the rotating body 7100 which is the specimen. This allows to rotate the rotating body 7100 while utilizing the regenerative energy to perform the dynamic balancing test.

More specifically, in the balance measurement device 7000, the servo amplifier 4850, including the inverter 4852, is a drive device that is supplied with energy from a power source and is controlled by the controller C4 to supply, to the motor 10, driving electric power that causes the rotating body 7100 to rotate as a predetermined speed. The power regenerative converter 4851 regenerates, among the energy regenerated from the motor 10, energy that is not consumed by the acceleration of the motor 10 to the power source when the controller C4 controls the servo amplifier 4850 (the inverter 4852) to cause the rotating body 7100 at the predetermined speed.

By being configured as described above, the balance measurement device 7000 can effectively use the regenerative energy in the dynamic balancing test of rotating bodies such as crankshafts, thereby reducing electric power consumption required for the test.

### (Eighth Embodiment)

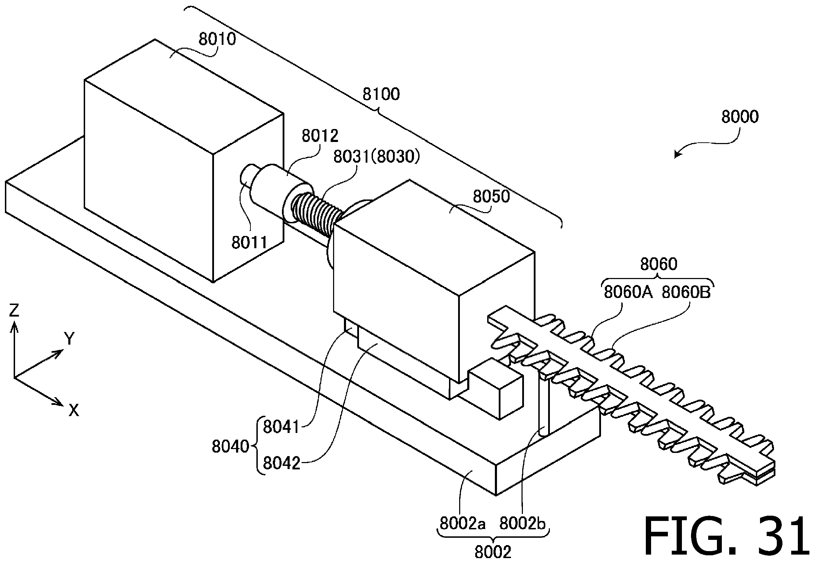

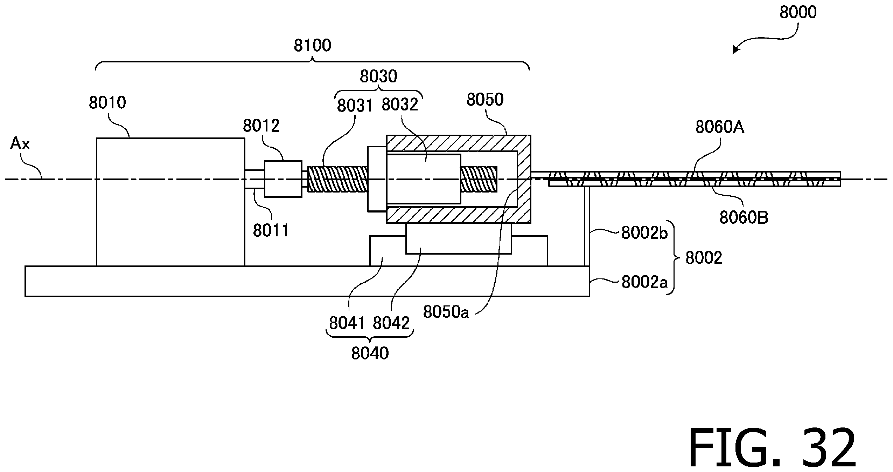

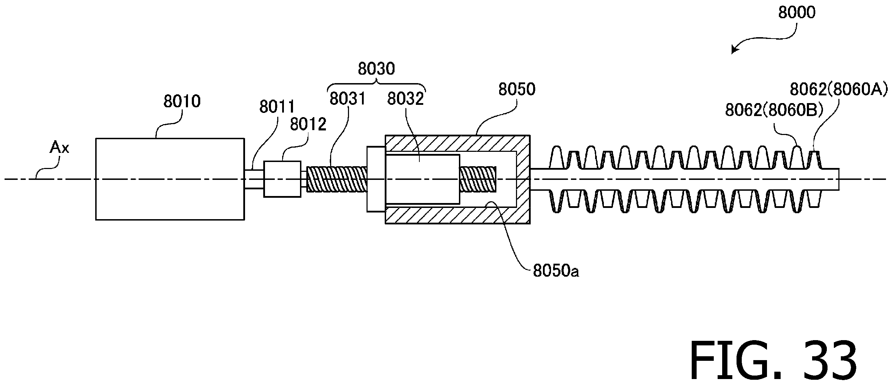

FIGS. 31, 32, and 33 are a perspective view, a side view, and a plan view, respectively, of a hedge trimmer 8000 according to an eighth embodiment of the present invention. In FIGS. 32 and 33, a later-described piston 8050 is shown in cross-sectional view. In FIG. 33, a later-described frame 8002 is not shown.

The hedge trimmer 8000 is a motorized farm equipment (i.e., electrical equipment) used for trimming hedges and trees. The hedge trimmer 8000 includes the frame 8002, an electric actuator 8100 according to an embodiment of the present invention, and a pair of blades 8060 (8060A, 8060B). The electric actuator 8100 is a linear actuator that generates linear motion in a direction of an axis line Ax, and causes a reciprocating linear motion of the blades 8060, as described below.

The hedge trimmer 8000 includes a cover covering an internal structure of the electric actuator 8100, for example a handle attached to the frame 8002 for holding the hedge trimmer 8000, and an operating section including, for example, operation buttons and operation switches for operating the hedge trimmer 8000 However, for convenience of explanation, these components are omitted from the illustration.

The frame 8002 has a base 8002a that supports the electric actuator 8100, and a rod 8002b that stands at one end of the base 8002a.

The electric actuator 8100 includes a motor 8010 (a drive part), a ball screw 8030 (a feed screw mechanism) which is a motion converter that converts power (rotational motion) output by the motor 8010 into linear motion, the piston 8050 (a linear motion part) driven by the ball screw 8030 in a direction of the axis line Ax, and a linear guide 8040 that supports the piston 8050 movably in the direction of the axis line Ax. The motor 8010 and the linear guide 8040 are attached to the base 802a.

The motor 8010 is an electric motor of which rotation can be switched between forward and reverse rotations and is, for example, an ultra-low inertia and high output type AC servomotor. The use of the ultra-low inertia and high output electric motor enables to drive the electric motor to repeatedly rotate back and forth at high frequencies of, for example, 100 Hz or higher.

The ball screw 8030 includes a plurality of balls (not shown) that are rolling elements, a screw shaft 8031 with a spiral first screw groove formed on an outer circumference thereof, and a nut 8032 with a cylindrical through-hole (not shown) through which the screw shaft 8031 passes. A second screw groove (not shown) is formed on an inner circumference of the through hole of nut 8032 at a position opposing the first screw groove, and a plurality of balls are filled in a rolling path enclosed by the first and second screw grooves and the screw shaft 8031 and the nut 8032 engage via the balls. Both ends of the rolling path are connected to a return channel to form a circulatory path (closed path) through which the balls circulate. Rollers may be used as rolling elements in place of the balls.

The screw shaft 8031 of the ball screw 8030 is connected to a shaft 8011 of the motor 8010 coaxially (i.e., such that axes of rotation or centerlines coincide) by a shaft coupling 8012. The axis line Ax of the electric actuator 8100 of the present embodiment is a centerline of the shaft 8011 of the motor 8010 and the screw shaft 8031 of the ball screw 8030.

The piston 8050 is a member formed with a cylindrical hollow part 8050a formed around the axis line Ax. The nut 8032 of the ball screw 8030 is accommodated in the hollow part 8050a and fixed to the piston 8050.

The linear guide 8040 of the present embodiment is a guideway-type circulating linear bearing including a rail 8041 and a carriage 8042 that can travel on the rail 8041. A linear bearing of another type (e.g., rolling bearing or sliding bearing) or other linear guide mechanism may be used for the linear guide 8040.

The blade 8060 is a steel plate long in the direction of the axis line Ax with a plurality of teeth 8062 (FIG. 33) formed on both edges. A pair of blades 8060 are stacked, one (the blade 8060A) is fixed to one end of the piston 8050 in the direction of the axis line Ax, and the other (the blade 8060B) is fixed to a tip of the rod 8002b. That is, the blade 8060A can be driven in the direction of the axis line Ax by the electric actuator 8100 with respect to the fixed blade 8060B.

The motor 8010 is driven so that the shaft 8011 repeatedly rotate back and forth within a predetermined angular range. The rotation of shaft 8011 is converted into linear motion by the ball screw 8030 and transmitted to the piston 8050. That is, the piston 8050 and the blade 8060A repeat reciprocating linear motion in the direction of the axis line Ax with a predetermined stroke. As the blade 8060A repeatedly reciprocates in the direction of the axis line Ax with respect to the fixed blade 8060B, and an object to be cut such as branch or leaf is pinched between the teeth 8062 of the pair of blades 8060A and 8060B to be cut.

A configuration of an electric power feeding system that supplies driving electric power to the motor 8010 is identical to the electric power feeding system 4800 of the fourth embodiment shown in FIG. 20, but will be described again here.

A primary power source 4810 is a commercial power source or a power source device and supplies, for example, single-phase alternating current electric power or three-phase alternating current electric power (hereinafter referred to as "system electric power"). The system electric power supplied from the primary power source 4810 is supplied to the servo amplifier 4850 (drive device) via a circuit breaker 4820, an electromagnetic switch 4830, and a reactor 4840 which are optionally provided. The servo amplifier 4850 is an inverter device that converts alternating current supplied from the primary power source 4810 into driving electric power for the motor 8010. The motor 8010 is connected to an output terminal of the servo amplifier 4850, and the driving electric power is supplied from the servo amplifier 4850 to the motor 8010. The servo amplifier 4850 is communicatively connected to the controller C4 and operates in accordance with control by the controller C4. The servo amplifier 4850 and the motor 8010 constitute the electric actuator 8100, and the electric actuator 8100 is controlled by the controller C4.

The servo amplifier 4850 includes the power regenerative converter 4851, the inverter 4852, and a capacitor 4853. The power regenerative converter 4851 is a converter suitable for electric power regeneration and is, for example, a PWM (Pulse Width Modulation) converter that sinusoidalizes a power source side current by PWM control. The power regenerative converter 4851 may also convert electric power using the 120-degree-energization method. The inverter 4852 is, for example, a PWM inverter that controls electric power to be output by PWM control.

The inverter 4852 is a drive device that is supplied with electric power from the primary power source 4810 being a power source and controlled by the controller C4 being a controller to supply driving electric power to the motor 8010 being an electric motor to cause the blade 8060A to linearly move back and forth. The power regenerative converter 4851 regenerates electric power that is not consumed by the acceleration of the servomotor 150, among electric power regenerated from the motor 8010 being an electric motor when the blade 8060A is caused to linearly move back and forth, to the power source.

The power regenerative converter 4851 of the present embodiment has a function of rectifying the alternating current supplied from the primary power source 4810 during power operation and a function of generating alternating current of the same quality as the system electric power to be returned to the primary power source 4810 during regenerative operation. However, a converter dedicated to the power operation and a converter dedicated to the electric power regeneration may be provided separately.

When driving the motor 8010 (during the power operation), the alternating current electric power output from the reactor 4840 is converted into direct current by the power regenerative converter 4851, smoothed by the capacitor 4853, and then converted into alternating current (e.g., pulse train) driving electric power by the inverter 4852. The driving electric power output from the inverter 4852 is input to the motor 8010 to rotationally drive the motor 8010.

When the motor 8010 generates regenerative electric power (during the regenerative operation), the regenerative electric power output from the motor 8010 is converted into direct current by the inverter 4852 and input to the power regenerative converter 4851 via a direct current bus bar 4854. One system of the direct current bus bar 4854 consists of a pair of positive and negative conductive wires. The power regenerative converter 4851 converts the direct current electric power supplied from the direct current bus bar 4854 to sinusoidal alternating current and outputs the alternating current to the primary power source 4810 via the reactor 4840, the electromagnetic switch 4830 and the circuit breaker 4820.

A drive waveform of one cycle of the motor 8010 is shown in FIG. 9. That is, the motor 8010 is driven so that an angular position 0 of the shaft 8011 fluctuates repeatedly in the range of -θa to θa according to a sinusoidal drive waveform. By repeating acceleration (power operation) and deceleration (regenerative operation) while alternating the direction, the shaft 8011 of the motor 8010 rotates back and forth. Such reciprocating rotation is repeated, for example, at a repetition frequency of 500Hz at maximum. It should be noted that the drive waveform of the motor 8010 is not limited to the sine wave.

As described above, in the present embodiment, the supply of electric power to the motor 8010 and the generation of the regenerative electric power by the motor 8010 are repeated alternately to cause the motor 8010 to perform repeated acceleration and deceleration operations. Short-time (e.g., about one cycle of the motor 8010) voltage fluctuations in the direct current bus bar 4854 due to the transfer of electric power to and from the motor 8010 are mainly adjusted (in other words, leveled) by the capacitor 4853. Therefore, most of the amount of electric power supplied to the motor 8010 in sections A and C shown in Figure 9(a) is recovered (i.e., accumulated in the capacitor 4853) as regenerative electric power in sections B and D and reused, allowing the motor 8010 to be driven with almost no consumption of electric power supplied from the primary power source 4810.

### (Ninth Embodiment)

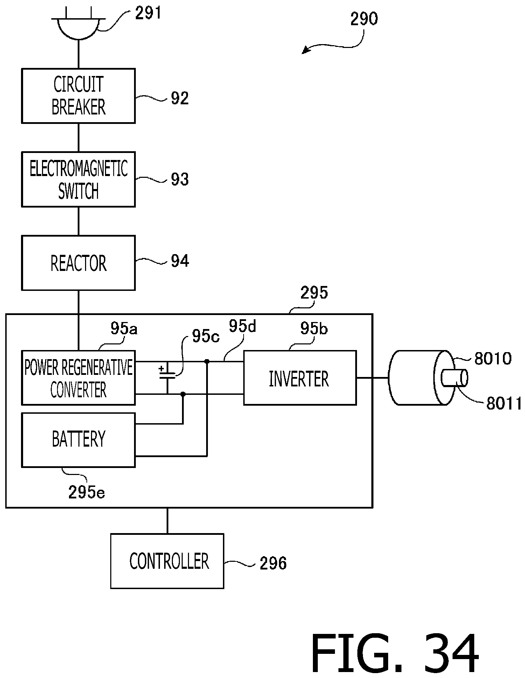

FIG. 34 is a block diagram showing a schematic configuration of an electric power feeding system 290 of an electric actuator according to a ninth embodiment of the present invention.

The electric power feeding system 290 of the ninth embodiment differs from the electric power feeding system of the fourth embodiment (FIG. 20) in that the electric power feeding system 290 includes a plug 291 to be plugged into a primary electric power outlet (not shown) and in a configuration of a servo amplifier 295. A circuit breaker 92, an electromagnetic switch 93, a reactor 94, a power regenerative converter 95a, an inverter 95b, a capacitor 95c, and a direct current bus bar 95d in FIG. 34 correspond to the circuit breaker 4820, the electromagnetic switch 4830, the reactor 4840, the power regenerative converter 4851, the inverter 4852, the capacitor 4853, and the direct current bus bar 4854 in FIG. 20, respectively.

The servo amplifier 295 of the ninth embodiment includes a battery 295e. The electric actuator of the ninth embodiment includes the battery 295e so that it can be operated by the electric power accumulated in the battery 295e even when it is disconnected from the primary power source. The battery 295e is connected in parallel with the power regenerative converter 95a and the inverter 95b to the direct current bus bar 95d consisting of a pair of conductors.

When the plug 291 is connected to the primary power source, the system electric power supplied from the primary power source is rectified by power regenerative converter 95a and then stored and rectified by the capacitor 95c and the battery 295e. During power operation, direct current electric power supplied from the capacitor 95c and the battery 295e via the direct current bus bar 95d is converted into driving electric power by the inverter 95b and supplied to the motor 8010. When the plug 291 is not connected to the primary power source, the driving electric power is generated by the electric power accumulated in the battery 295e.

The regenerative electric power supplied from the motor 8010 during the regenerative operation is converted into direct current by the inverter 95b and then stored and rectified by the capacitor 95c and the battery 295e. The regenerative electric power stored by the capacitor 95c and the battery 295e is reused to generate driving electric power with the inverter 95b during the power operation. When the plug 291 is connected to the primary power source, excess regenerative electric power is converted into sinusoidal alternating current equivalent to the system electric power by the power regenerative converter 95a and returned to the primary power source.

### (Tenth Embodiment)

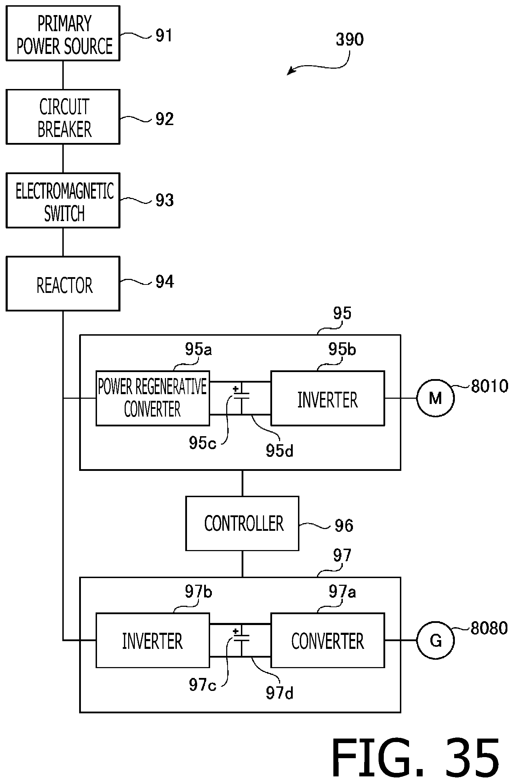

FIG. 35 is a block diagram showing the schematic configuration of an electric power feeding system 390 of an electric actuator according to a tenth embodiment of the present invention.

The electric power feeding system 390 of the tenth embodiment differs from the electric power feeding system 4800 of the fourth embodiment in that the electric power feeding system 390 includes a generator 8080, and an inverter device 97 that converts electric power generated by the generator 8080 into a sinusoidal alternating current equivalent to the system electric power and supplies the sinusoidal alternating current to the primary power source side. The generator 8080 is connected, for example, between the motor 8010 and the ball screw 8030. The inverter device 97 is communicatively connected to a controller 96 and operates in accordance with control by the controller 96.

The inverter device 97 includes a converter 97a, an inverter 97b, and a capacitor 97c. The converter 97a includes a full-wave rectifier including, for example, a diode bridge circuit. A PWM converter may be provided on an input side of converter 97a to sinusoidalize input current to the converter 97a. The inverter 97b is, for example, a PWM inverter that controls output electric power by PWM control.

Electric power generated by the generator 8080 is converted into direct current by the converter 97a, smoothed by the capacitor 97c, and then input to the inverter 97b. A pair of positive and negative conductors constitute one direct current bus bar 97d. The inverter 97b converts direct current electric power supplied from the direct current bus bar 97d into a sinusoidal alternating current of the same quality as the system electric power and outputs the sinusoidal alternating current to the primary power source 91 side.

The generator 8080 generates electric power using a portion of power generated by the motor 8010. The electric power generated by the 8080 generator is used to generate driving electric power by a servo amplifier 95, and surplus is returned to the primary power source.

According to the configuration of the present embodiment, since electric power is generated by the generator 8080 and supplied to the primary power source 91 side not only during regenerative operation but also during power operation, electric energy can be used more efficiently.

Although the 8080 generator of the present embodiment is an alternating current generator, a direct current generator may also be used. In this case, the converter 97a of the inverter device 97 is not needed because rectification of the electric power generated by the generator is not required. Therefore, for example, an output terminal of the direct current generator is connected to the direct current bus bar 97d without via the converter 97a.

The inverter device 97 may be provided with a battery, and the battery may be connected to the direct current bus bar 97d in parallel with the capacitor 97c.

A clutch may be provided between the generator 8080 and the motor 8010, and the timing of power absorption by the generator 8080 may be controlled by intermittency of the clutch.

The direct current bus bar 97d, the capacitor 97c, and the inverter 97b of the inverter device 97 may be shared with the direct current bus bar 95d, the capacitor 95c, and the power regenerative converter 95a of the servo amplifier 95, respectively.

### (Eleventh Embodiment)

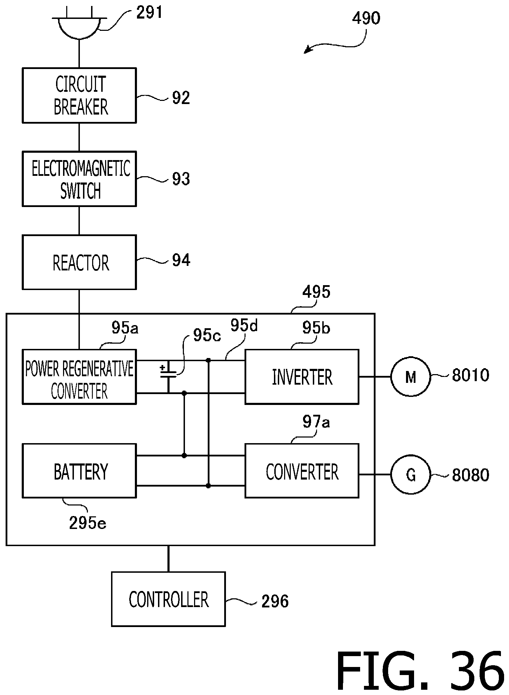

FIG. 36 is a block diagram showing a schematic configuration of an electric power feeding system 490 of an electric actuator 400 according to an eleventh embodiment of the present invention.

The electric power feeding system 490 of the eleventh embodiment is an electric power feeding system obtained by adding the generator 8080 of the tenth embodiment in the electric power feeding system 290 of the nineth embodiment, and by further adopting a servo amplifier 495 obtained by incorporating the functions of the inverter device 97 of the tenth embodiment in the servo amplifier 295 (specifically, by adding the converter 97a of the tenth embodiment).

In the electric power feeding system 390 of the tenth embodiment, since the servo amplifier 95 and the inverter device 97 are separated and each connected to the primary power source 91, an interface with the primary power source 91 (the power regenerative converter 95a and the inverter 97b) and a direct current circuit (the direct current bus bars 95d and 97d, and the capacitors 95c and 97c) are provided separately. In contrast, in the electric power feeding system 490 of the eleventh embodiment (specifically, in the servo amplifier 495), the inverter 97b, the direct current bus bar 97d, and the capacitor 97c which are redundant are removed by integrating the servo amplifier 95 and the inverter device 97.

### (Twelfth Embodiment)

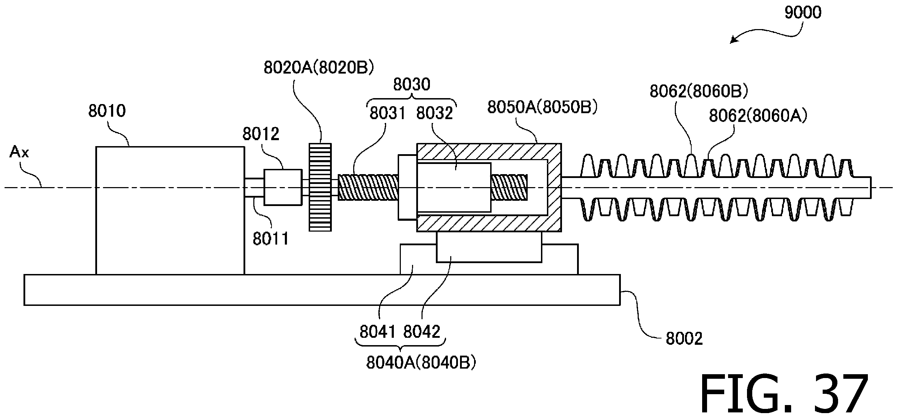

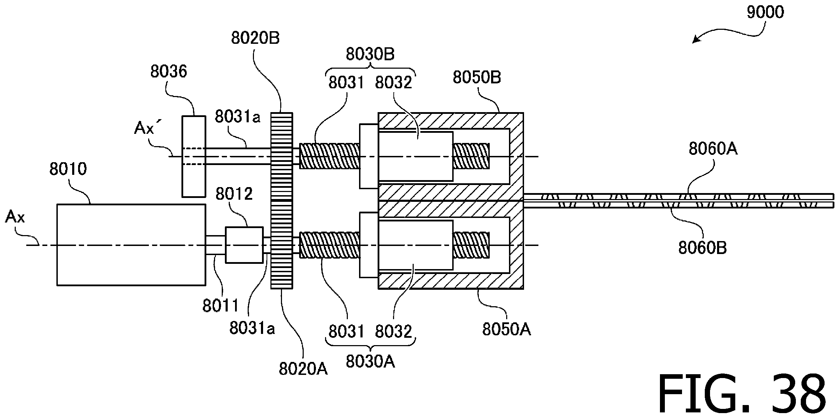

FIGS. 37 and 38 are side and front views, respectively, of a hedge trimmer 9000 according to a twelfth embodiment of the present invention. In FIGS. 37 and 38, the pistons 8050 are shown in cross-sectional view. In FIG. 38, the frame 8002 is omitted.

While, in the hedge trimmer 8000 of the eighth embodiment described above, only one of the pair of blades 8060 is driven, the hedge trimmer 9000 of the present embodiment is configured so that both of the pair of blades 8060 are driven in opposite directions to each other.

The electric actuator according to the twelfth embodiment of the present invention includes a pair of ball screws 8030 (8030A, 8030B), a pair of linear guides 8040 (8040A, 8040B) and a pair of pistons 8050 (8050A, 8050B) are provided for the pair of blades 8060 (8060A, 8060B), respectively. In the present embodiment, the ball screw 8030A, the linear guide 8040A, and the piston 8050A form a first motion converter, and the ball screw 8030B, the linear guide 8040B, and the piston 8050B form a second motion converter. The second motion converter includes a bearing 8036 that rotatably supports the ball screw 8030B at one end.

The blade 8060A is fixed to the piston 8050A of the first motion converter, and the blade 8060B is fixed to the piston 8050B of the second motion converter.

The frame 8002 of the present embodiment does not have the rod 8002b for securing the blade 8060B. That is, the blade 8060B is not fixed to the frame 8002 and can move with the piston 8050B. The motor 8010, the rails 8041 of the pair of linear guides 8040A and 8040B, and the bearing 8036 are fixed to the base 8002a (the frame 8002).

The electric actuator includes a pair of gears 8020 (8020A, 8020B) coupled coaxially with the screw shafts 8031 of the pair of ball screws 8030A, 8030B, respectively. The gears 8020 are attached to support parts 8031a (portions without the ball groove) of the screw shaft 8031. The screw shafts 8031 of the pair of ball screws 8030A and 8030B are arranged parallel to each other so that the gears 8020A and 8020B mesh with each other. The gears 8020A and 8020B have the same specifications (e.g., spur gears with the same number of teeth). Therefore, when the screw shaft 8031 of the ball screw 8030A rotates, the screw shaft 8031 of the ball screw 8030B rotates in the opposite direction at the same rotation speed.

Since the ball screw 8030A and ball screw 8030B also have the same specifications, when the screw shaft 8031 of the ball screw 8030A and the screw shaft 8031 of the ball screw 8030B rotate in opposite directions to each other at the same rotation speed, the nut 8032 of the ball screw 8030A and the nut 8032 of the ball screw 8030B move linearly along the respective screw shafts 8031 in opposite directions to each other and at the same speed. Therefore, the blade 8060A fixed to the piston 8050A and the blade 8060B fixed to the piston 8050B also move linearly at the same speed in opposite directions to each other.

According to the hedge trimmer 9000 of the twelfth embodiment described above, since both of the pair of blades 8060 are driven in opposite directions to each other, pruning can be performed more efficiently than the hedge trimmer 8000 of the eighth embodiment. In addition, since momentum in the direction of the axis line Ax that a material to be cut receives from each of the blades 8060A and 8060B is offset, scattering of chips in the direction of the axis line Ax can be suppressed.

The foregoing is a description of exemplary embodiments of the present invention. Embodiments of the present invention are not limited to those described above, and various variations are possible within the scope of the technical concept of the present invention. For example, appropriate combinations of the embodiments explicitly indicated by way of example in the specification and/or obvious embodiments are also included in the embodiments of the present invention.

The first through seventh embodiments described above are embodiments to which the present invention is applied to test devices, but the present invention is not limited to the above and can be applied to any electric motor system that uses electric motors such as, for example, electric mobility.

The eighth through twelfth embodiments described above are embodiments to which the present invention is applied to hedge trimmers, but the present invention is not limited to the above and can be applied to electrical equipment that uses linear actuators, such as electric saws (reciprocating saws), electric hammers, electric toothbrushes and the like. The electric actuator of the present invention can also be used individually without being incorporated into various types of electrical equipment.

In the eighth through twelfth embodiments described above, a feed screw mechanism is used as the motion converter for converting rotational motion into linear motion, but other types of motion converters (e.g., a mechanism described in Patent Document 1 in which an eccentric cam is used, a slider-crank mechanism, rack-and-pinion mechanism and the like) may be used.

In the eighth through twelfth embodiments described above, the screw shaft 8031 of the ball screw 8030 is directly connected to the shaft 8011 of the motor 8010, but a reduction gear may be provided in the drive section, and the motor 8010 and the ball screw 8030 (or other motion converter) may be connected via the reduction gear.

The electric power feeding system of the fourth embodiment (FIG. 20) and the electric power feeding system of the tenth embodiment (FIG. 35) may also be provided with the plug 291 and the battery 295e as in the ninth embodiment.

The plug 291 and the battery 295e may be removed from the electric power feeding system of the ninth embodiment (FIG. 34) and the electric power feeding system of the eleventh embodiment (FIG. 36), and the circuit breaker 92 may be directly connected to the primary power source 91.

In the electric power feeding system of the ninth embodiment (FIG. 34) and the electric power feeding system of the eleventh embodiment (FIG. 36), the battery 295e may be removed, and the capacitor 95c with a large capacitance may be used so that the capacitor 95c also performs the storage function of the battery 295e. In addition to the battery 295e, the capacitor 95c with a large capacitance may be provided in the electric power feeding system.

The tenth and eleventh embodiments described above illustrate configurations including a generator in the electric power feeding system, but the generator may be provided not only in the tenth and eleventh embodiments but also in the electric power feeding systems of the other embodiment.

In each of the embodiments described above, the motor is an AC servomotor, but another type of electric motor of which drive amount (rotation angle) can be controlled, such as a DC servomotor or stepping motor, may be used as the motor.

In each of the embodiments described above, the linear actuator consists of a rotary motor and a motion converter, but a linear motor may be used as the linear actuator in place of the rotary motor and motion transducer.

In each of the embodiments described above, an ultra-low inertia servomotor is used as the torque generator, but the present invention is not limited to such configuration. Configurations in which other types of electric motors (e.g., inverter motors) of which rotors have small moments of inertia and can be driven at high acceleration or acceleration rates are used are also included in the present invention. In this case, as in each of the embodiments described above, a configuration in which an encoder is provided on the electric motor and feedback control is performed by a rotational state of the output shaft of the electric motor detected by the encoder (e.g., rotation speed or angular position) may be employed.

The embodiments described above are examples of the application of the present invention to endurance test devices for power transmission devices mainly for automobiles, but the present invention is not limited to these and can be used for various applications in overall industry. For example, the present invention can be used for automobiles (2-wheeled vehicles, 3-wheeled vehicles, 4-wheeled vehicles, buses, trucks, tractors), agricultural machinery, construction machinery, railroad vehicles, ships, aircraft, electric power generation systems, water supply and drainage systems, various components (electric motor systems) configuring them, or testing systems suitable for evaluating mechanical characteristics and durability thereof.

The electric actuator of the present invention can also be used as an electric motor system for various industrial machines such as construction machinery, agricultural machinery, woodworking machinery, machine tools, forging machinery, injection molding machines, robots, and transportation machinery (e.g., cranes, elevators, and conveyors).

The electric actuator according to the present invention can also be used as a prime mover for various home appliances (washing machines, refrigerators, air conditioners, compressors and the like).

In each of the embodiments described above, a power regenerative converter capable of returning excess regenerative electric power from the servo amplifier to the primary power source side is used, but a converter that does not have an electric power regeneration function for returning excess electric power to the primary power source side may be used. When a converter hat does not have an electric power regeneration function is used, it is desirable to provide a device for storing excess electric power (e.g., a large-capacity capacitor or a large-capacity battery) in the servo amplifier without providing a regenerative resistor for absorbing regenerative electric power in the servo amplifier.

Each of the embodiments described above illustrates a system that drives an electric motor by converting electric power supplied from a primary power source, but the electric power supplied from the power source to the system is not limited to alternating current electric power. As shown in FIGS. 34 and 36, direct current electric power supplied from the battery may be converted to drive the electric motor. In this case, the regenerative electric power may be stored in the battery.

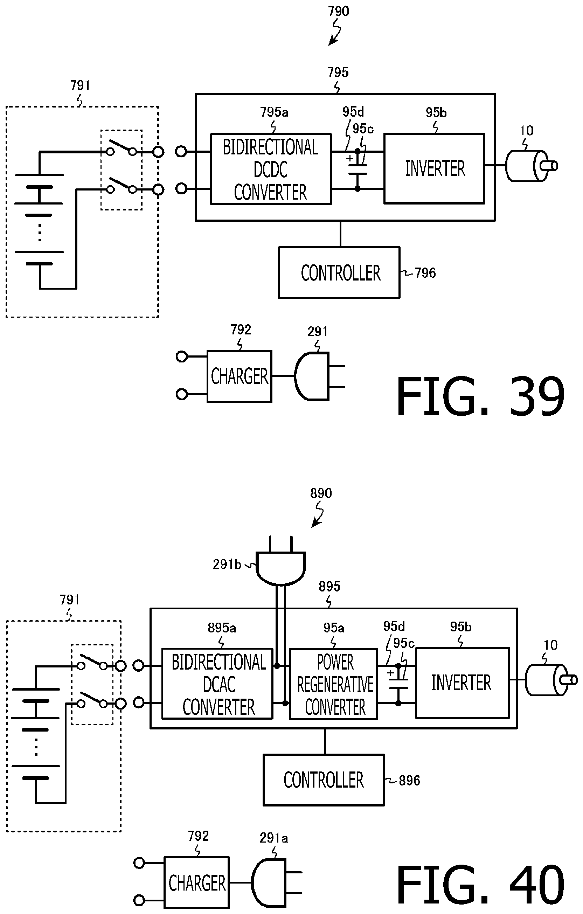

FIGS. 39 and 40 are diagrams showing variations of the electric power feeding system that supplies electric power to the electric actuator according to each of the embodiments. In each of the embodiments described above, a system that converts electric power supplied from a primary power source to drive an electric motor is illustrated, but electric power to be supplied from a power source to the system is not limited to alternating current electric power. As shown in FIGS. 39 and 40, the motor 10 can be driven by supplying direct current electric power supplied from a battery 791 to an inverter via a converter. In this case, the regenerative electric power is stored in the battery 791 instead of being output to the primary power source.

An electric power feeding system 790 shown in FIG. 39 includes a bidirectional DCDC converter 795a as the converter. First, a charger 792 is connected to the battery 791, and the battery 791 is charged by the electric power supplied via the charger 792 from the plug 291 plugged into an outlet (not shown) of a primary power source. Next, the battery 791 is connected to a servo amplifier 795, and electric power from the battery 791 is supplied to the inverter 95b via the bidirectional DCDC converter 795a to drive the motor 10, and regenerative electric power from the inverter 95b is output to the battery 791 via the bidirectional DCDC converter 795a.

The electric power feeding system 890 shown in FIG. 40 includes a bidirectional DCAC converter 895a upstream of the power regenerative converter 95a. First, the charger 792 is connected to the battery 791, and the battery 791 is charged by the electric power supplied via the charger 792 from a plug 291a that is plugged into a primary electric power outlet (not shown). Next, the battery 791 is connected to a servo amplifier 895, and electric power from the battery 791 is supplied to the inverter 95b via the bidirectional DCAC converter 895a and the power regenerative converter 95a to drive the motor 10, and regenerative electric power from the inverter 95b is output via the power regenerative converter 95a and the bidirectional DCAC converter 895a to the battery 791. The power regenerative converter 95a and the bidirectional DCAC converter 895a are connected to a plug 291b. Electric power from the plug 291b which is plugged into a primary electric power outlet (not shown) is supplied to the inverter 95b via the power regenerative converter 95a, and this electric power can also drive the motor 10. The electric power supplied from the plug 291b is also supplied to the battery 791 via the bidirectional DCAC converter 895a, and this electric power can be used to charge the battery 791.

In each of the embodiments described above, electric power was regenerated from the motor 10 to the primary power source via the inverter 95b and the power regenerative converter 95a, but the electric power may be regenerated from the motor 10 to the primary power source without going through the inverter 95b and the power regenerative converter 95a.

This specification also discloses the following inventions.

### [Additional Note 1]

A power-saving electric motor system, including:
an electric motor;
a drive device that supplies driving electric power to the electric motor; and
a controller that controls the drive device,
wherein the drive device includes:
   a converter that converts alternating current electric power supplied from a power source into direct current electric power; and
   an inverter that generates the driving electric power from the direct current electric power,
wherein the controller controls the drive device to drive the electric motor to repeatedly rotate back and forth.

### [Additional Note 2]

The power-saving electric motor system according to Additional Note 1,
wherein the drive device includes:
a direct current bus bar consisting of a pair of conductors and connecting the converter to the inverter; and
a capacitor that connects the pair of conductors.

### [Additional Note 3]

The power-saving electric motor system according to Additional Note 1,
including a plurality of the electric motors,
wherein the drive device includes:
   one system of direct current bus bar consisting of a pair of conductors connected to the converter;
   a plurality of the inverters connected to the one system of the direct current bus bar; and
   a capacitor that connects the pair of conductors.

### [Additional Note 4]

The power-saving electric motor system according to any one of Additional Note 1 to Additional Note 3,
wherein the converter is a PWM converter.

### [Additional Note 5]

The power-saving electric motor system according to any one of Additional Note 1 to Additional Note 4,
wherein the controller controls the electric motor to drive the electric motor to repeatedly rotate back and forth at a frequency of 3Hz or more.

### [Additional Note 6]

A vibration test device, including:
the power-saving electric motor system according to any one of Additional Note 1 to Additional Note 5;
a motion converter that converts rotational motion output by the electric motor into linear motion; and
a table vibrated by the linear motion.

### [Additional Note 7]

The vibration test device according to Additional Note 6,
wherein the motion converter is a ball screw,
wherein the ball screw includes:
   a screw shaft connected to a shaft of the electric motor; and
   a nut that engages with the screw shaft and moves in an axial direction as the screw shaft rotates,
wherein the table is coupled to the nut and is configured to move in the axial direction together with the nut.

### [Additional Note 8]

A power-saving test system including the power-saving electric motor system according to any one of Additional Note 1 to Additional Note 5.

### [Additional Note 11]

An electric actuator, including:
an electric motor;
a drive device that supplies driving electric power to the electric motor;
a controller that controls the drive device; and
a motion converter that converts rotational motion output by the electric motor into linear motion,
wherein the drive device includes:
   a converter that converts alternating current electric power supplied from a power source into direct current electric power; and
   an inverter that generates the driving electric power from the direct current electric power,
wherein the controller controls the drive device so that the electric motor outputs repeating reciprocating rotary motion.

### [Additional Note 12]

The electric actuator according to Additional Note 11,
wherein the drive device includes:
a direct current bus bar consisting of a pair of conductors and connecting the converter to the inverter; and
a capacitor that connects the pair of conductors.

### [Additional Note 13]

The electric actuator according to Additional Note 11 or Additional Note 12,
wherein the converter is a PWM converter.

### [Additional Note 14]

The electric actuator according to any one of Additional Note 11 to Additional Note 13,
wherein the controller controls the drive device to drive the electric motor to repeatedly rotate back and forth at a frequency of 3Hz or more.

### [Additional Note 15]

The electric actuator according to any one of Additional Note 11 to Additional Note 14 including a generator that generates electric power by power output by the electric motor.

### [Additional Note 16]

The electric actuator according to Additional Note 15 including an inverter device that converts electric power generated by the generator into alternating current equivalent to system electric power and supplies the alternating current to a power source side.

### [Additional Note 17]

The electric actuator according to Additional Note 16,
wherein the motion converter is a ball screw, and
wherein the ball screw includes:
   a screw shaft connected to a shaft of the electric motor; and
   a nut that engages with the screw shaft via a plurality of balls being rolling bodies and moves in an axial direction as the screw shaft rotates.

### [Additional Note 18]

An electric appliance including the electric actuator according to any one of Additional Note 11 to Additional Note 17.

Claims of the present application at the time of filing are further noted below.

### [Additional Note 21]

A vibration test device, including:
a vibrating table on which an object to be vibrated is to be attached;
an electric actuator that vibrates the vibrating table in a predetermined direction; and
a controller that controls the electric actuator,
wherein the electric actuator includes:
   an electric motor of which rotation can be switched between forward and reverse rotations; and
   a drive device that is supplied with electric power from a power source and controlled by the controller to supply driving electric power for vibrating the vibrating table at desired amplitude and frequency to the electric motor,
wherein the drive device includes a power regenerative converter that regenerates electric power that is not consumed by acceleration of the electric motor, among electric power regenerated from the electric motor when the vibrating table is vibrated at the desired amplitude and frequency, to the power source.

### [Additional Note 22]

The vibration test device according to Additional Note 21, wherein:
the controller controls the drive device so that the electric motor repeats forward and reverse rotations at a required frequency during a drive period of the electric motor, and
the power regenerative converter outputs the electric power regenerated from the electric motor during deceleration processes of the electric motor in the forward and reverse rotations, respectively, to the power source.

### [Additional Note 23]

The vibration test device according to Additional Note 21, wherein:
among a forward rotation period and a reverse rotation period of the electric motor which are continuously repeated, the vibrating table moves in a forward direction during the forward rotation period, and the vibrating table moves in a reverse direction during the reverse rotation period,
the forward rotation period includes a first acceleration period of the electric motor that starts at the time when the vibrating table starts moving and a first deceleration period of the electric motor that ends when the vibrating table stops moving,
the reverse rotation period includes a second acceleration period of the electric motor that starts at the time when the vibrating table starts moving and a second deceleration period of the electric motor that ends at the time when the vibrating table stops moving, and
the controller:
   accelerates the electric motor so that torque of the electric motor becomes positive during the first acceleration period;
   decelerates the electric motor so that the torque of the electric motor becomes negative during the first deceleration period;
   accelerates the electric motor so that the torque of the electric motor becomes positive during the second acceleration period; and
   decelerates the electric motor so that the torque of the electric motor becomes negative during the second deceleration period.

### [Additional Note 24]

The vibration test device according to Additional Note 23, wherein:
the drive device further includes a capacitor provided between the power regenerative converter and the electric motor, and
the controller is configured to control the drive device so that energy regenerated from the electric motor and accumulated in the capacitor during the first deceleration period is supplied to the electric motor with priority over energy supplied from the power source during the second acceleration period, and energy regenerated from the electric motor and accumulated in the capacitor during the second deceleration period is supplied to the electric motor with priority over energy supplied from the power source during the first acceleration period.

### [Additional Note 25]

The vibration test device according to Additional Note 23, wherein:
the drive device further includes a capacitor provided between the power regenerative converter and the electric motor,
the controller repeats an energy cycle comprising the first acceleration period, the first deceleration period, the second acceleration period, and the second deceleration period in the drive period,
during the first acceleration period, at least energy accumulated in the capacitor during the second deceleration period of the previous energy cycle is supplied to the electric motor,
during the first deceleration period, energy regenerated from the electric motor is accumulated in the capacitor,
during the second acceleration period, at least energy accumulated in the capacitor during the first deceleration period in the current energy cycle is supplied to the electric motor, and
during the second deceleration period, energy regenerated from the electric motor is accumulated in the capacitor.

### [Additional Note 26]

The vibration test device according to Additional Note 22,
wherein the controller controls the drive device so that the electric motor repeats forward and reverse rotations at a required frequency of 3Hz or higher during the drive period.

### [Additional Note 27]

The vibration test device according to Additional Note 21, wherein:
the power source comprises an alternating current power source, and
the power regenerative converter comprises a bidirectional ACDC converter.

### [Additional Note 28]

The vibration test device according to Additional Note 21, wherein:
the power source comprises a direct current power source, and
the power regenerative converter comprises a bidirectional DCDC converter.

### [Additional Note 29]

A tire test device, including:
an electric actuator; and
a controller that controls the electric actuator,
wherein the electric actuator includes:
   an electric motor having a rotary shaft to be connected to a central axis of a tire; and
   a drive device that is supplied with energy from a power source and controlled by the controller to supply driving electric power for causing the electric motor to generate fluctuating torque to the electric motor,
wherein the drive device includes a power regenerative converter that regenerates energy that is not consumed by acceleration of the electric motor, among energy regenerated from the electric motor when the controller controls the drive device to cause the electric motor to generate the fluctuating torque, to the power source.

### [Additional Note 30]

A torsion test device, including:
an electric actuator; and
a controller that controls the electric actuator,
wherein the electric actuator includes:
   an electric motor having a rotary shaft to be connected to a specimen; and
   a drive device that is supplied with energy from a power source and controlled by the controller to supply driving electric power for causing the electric motor to generate fluctuating torque to the electric motor,
wherein the drive device includes a power regenerative converter that regenerates energy that is not consumed by acceleration of the electric motor, among energy regenerated from the electric motor when the controller controls the drive device to cause the electric motor to generate the fluctuating torque, to the power source.

### [Additional Note 31]

A tensile and compression test device, including:
an electric actuator; and
a controller that controls the electric actuator,
wherein the electric actuator includes:
   an electric motor of which rotation can be switched between forward and reverse rotations;
   a motion converter that performs reciprocating linear motion in response to the forward and reverse rotations of the electric motor;
   a movable part that receives the reciprocating linear motion of the motion converter and transmits compressive or tensile force to a specimen; and
   a drive device that is supplied with energy from a power source and controlled by the controller to supply driving electric power for causing the motion converter to perform the reciprocating linear motion at desired amplitude and frequency to the electric motor,
   wherein the drive device includes a power regenerative converter that regenerates energy that is not consumed by acceleration of the electric motor, among energy regenerated from the electric motor when the controller controls the drive device to cause the motion converter to perform the reciprocating linear motion at the desired amplitude and frequency.

### [Additional Note 32]

A dynamic balancing multi-test device, including:
a spindle to which a tire is to be mounted;
an electric actuator that outputs unidirectional rotary motion;
a transmission mechanism that transmits the unidirectional rotary motion to the spindle; and
a controller that controls the electric actuator,
wherein the electric actuator includes:
   an electric motor of which rotation can be switched between forward and reverse rotations;
   a motion converter that converts the forward and reverse rotations of the electric motor into a unidirectional rotary motion; and
   a drive device that is supplied with energy from a power source and controlled by the controller to supply driving electric power for causing the spindle to rotate at a predetermined speed to the electric motor,
wherein the drive device includes a power regenerative converter that regenerates energy that is not consumed by the acceleration of the electric motor, among energy regenerated from the electric motor when the controller controls the drive device to cause the spindle to rotate at the predetermined speed.

### [Additional Note 33]

A uniformity test device, including:
a rotating drum that contacts a tire,
an electric actuator that causes the rotating drum to perform a unidirectional rotary motion; and
a controller that controls the electric actuator,
wherein the electric actuator includes:
   an electric motor of which rotation can be switched between forward and reverse rotations;
   a motion converter that converts the forward and reverse rotations of the electric motor into a unidirectional rotary motion; and
   a drive device that is supplied with energy from a power source and controlled by the controller to supply driving electric power for causing the rotating drum to rotate at a predetermined speed to the electric motor,
wherein the drive device includes a power regenerative converter that regenerates energy that is not consumed by acceleration of the electric motor, among energy regenerated from the electric motor when the controller controls the drive device to cause the rotating drum to rotate at the predetermined speed, to the power source.

### [Additional Note 34]

A balance measurement device, including:
an electric actuator that outputs unidirectional rotary motion:
a transmission mechanism that transmits the unidirectional rotary motion to a specimen; and
a controller that controls the electric actuator,
wherein the electric actuator includes:
   an electric motor of which rotation can be switched between forward and reverse rotations;
   a motion converter that converts the forward and reverse rotations of the electric motor into the unidirectional rotary motion; and
   a drive device that is supplied with energy from a power source and controlled by the controller to supply driving electric power for causing the specimen to rotate at a predetermined speed to the electric motor,
wherein the drive device includes a power regenerative converter that regenerates energy that is not consumed by acceleration of the electric motor, among energy regenerated from the electric motor when the controller controls the drive unit to rotate the specimen at the predetermined speed, to the power source.

### [Additional Note 35]

A collision simulation test device, including:
an attachment part to which a specimen is to be attached;
an electric actuator that outputs unidirectional rotary motion;
a transmission mechanism that converts the unidirectional rotary motion into linear motion and transmits the linear motion to the attachment part; and
a controller that controls the electric actuator,
wherein the electric actuator includes:
   an electric motor of which rotation can be switched between forward and reverse rotations;
   a motion converter that converts the forward and reverse rotations of the electric motor into unidirectional rotary motion; and
   a drive device that is supplied with energy from a power source and controlled by the controller to supply driving electric power for providing a desired acceleration to the attachment part to the electric motor,
wherein the drive device includes a power regenerative converter that regenerates energy that is not consumed by acceleration of the electric motor, among energy regenerated from the electric motor when the controller controls the drive device to provide the desired acceleration to the attachment part, to the power source.

### [Additional Note 36]

A hedge trimmer, including:
a blade;
an electric actuator that causes the blade to perform a reciprocating linear motion; and
a controller that controls the electric actuator,
wherein the electric actuator includes:
   an electric motor of which rotation can be switched between forward and reverse rotations; and
   a drive device that is supplied with energy from a power source and controlled by said controller to supply driving electric power for causing the blade to perform the reciprocating linear motion to the electric motor,
wherein the drive device includes a power regenerative converter that regenerates energy that is not consumed by acceleration of the electric motor, among energy regenerated from the electric motor when the controller controls the drive device to cause said blade to perform the reciprocating linear motion, to the power source.

### [Additional Note 37]

An electric actuator, including:
at least one electric motor;
a drive device that supplies driving electric power to the electric motor; and
a controller that controls the drive device so that the electric motor repeats acceleration and deceleration,
wherein the drive device includes a first capacitor in which electric power regenerated from the electric motor is accumulated during a deceleration process of the electric motor.

### [Additional Note 38]

The electric actuator according to Additional Note 37, wherein:
the controller controls the drive device so that the electric motor repeats forward and reverse rotations at the required frequency in the drive section of the electric motor, and
the first capacitor accumulates electric power regenerated from the electric motor during the deceleration process of each of forward and reverse rotations of the electric motor.

### [Additional Note 39]

The electric actuator according to Additional Note 37
continuously repeats a forward rotation period and a reverse rotation period of the electric motor,
wherein, during the forward rotation period, the vibrating table moves in a forward direction,
wherein during the reverse rotation period, the vibrating table moves in a reverse direction,
wherein the forward rotation period includes a first acceleration period of the electric motor that starts at the time when the vibrating table starts moving and a first deceleration period of the electric motor that ends when the vibrating table stops moving,
wherein the reverse rotation period includes a second acceleration period of the electric motor that starts at the time when the vibrating table starts moving and a second deceleration period of the electric motor that ends at the time when the vibrating table stops moving, and
wherein the controller:
   accelerates the electric motor so that torque of the electric motor becomes positive during the first acceleration period;
   decelerates the electric motor so that the torque of the electric motor becomes negative during the first deceleration period;
   accelerates the electric motor so that the torque of the electric motor becomes positive during the second acceleration period; and
   decelerates the electric motor so that the torque of the electric motor becomes negative during the second deceleration period.

### [Additional Note 40]

The electric actuator according to Additional Note 37,
wherein the drive device includes a power regenerative converter that regenerates electric power regenerated from the electric motor to the power source via the first capacitor.

### DESCRIPTION OF REFERENCE NUMERALS

10, 150: servomotor
91, 1810, 2810, 3810, 4810: primary power source
95a, 1851, 2851, 3851, 4851: power regenerative converter
95b, 1852, 2852, 3852, 4852: inverter
95c, 1853, 2853, 3853, 4853: capacitor
96: controller
100, 400, 4010, 5320, 5420, 8100: electric actuator
295e: battery
1000: vibration test device
1100: vibrating table
1200, 1300, 1400: actuator
2000: tire test device
3000: torsion test device
4000: tensile and compression test device
5000: collision simulation test device
6000: dynamic balancing multi-test device
7000: balance measurement device
8000, 9000: hedge trimmer
8080: generator
C1, C2, C3: control unit

## Claims

1. A vibration test device, comprising:
a vibrating table on which an object to be vibrated is to be attached;
an electric actuator that vibrates the vibrating table in a predetermined direction; and
a controller that controls the electric actuator,
wherein the electric actuator includes:
an electric motor of which rotation can be switched between forward and reverse rotations; and
a drive device that is supplied with electric power from a power source and controlled by the controller to supply driving electric power for vibrating the vibrating table at desired amplitude and frequency to the electric motor,
wherein the drive device includes a power regenerative converter that regenerates electric power that is not consumed by acceleration of the electric motor, among electric power regenerated from the electric motor when the vibrating table is vibrated at the desired amplitude and frequency, to the power source.

2. The vibration test device according to claim 1, wherein:
the controller controls the drive device so that the electric motor repeats forward and reverse rotations at a required frequency during a drive period of the electric motor, and
the power regenerative converter outputs the electric power regenerated from the electric motor during deceleration processes of the electric motor in the forward and reverse rotations, respectively, to the power source.

3. The vibration test device according to claim 1, wherein:
among a forward rotation period and a reverse rotation period of the electric motor which are continuously repeated, the vibrating table moves in a forward direction during the forward rotation period, and the vibrating table moves in a reverse direction during the reverse rotation period,
the forward rotation period includes a first acceleration period of the electric motor that starts at the time when the vibrating table starts moving and a first deceleration period of the electric motor that ends when the vibrating table stops moving,
the reverse rotation period includes a second acceleration period of the electric motor that starts at the time when the vibrating table starts moving and a second deceleration period of the electric motor that ends at the time when the vibrating table stops moving, and
the controller:
accelerates the electric motor so that torque of the electric motor becomes positive during the first acceleration period;
decelerates the electric motor so that the torque of the electric motor becomes negative during the first deceleration period;
accelerates the electric motor so that the torque of the electric motor becomes positive during the second acceleration period; and
decelerates the electric motor so that the torque of the electric motor becomes negative during the second deceleration period.

4. The vibration test device according to claim 3, wherein:
the drive device further includes a capacitor provided between the power regenerative converter and the electric motor, and
the controller is configured to control the drive device so that energy regenerated from the electric motor and accumulated in the capacitor during the first deceleration period is supplied to the electric motor with priority over energy supplied from the power source during the second acceleration period, and energy regenerated from the electric motor and accumulated in the capacitor during the second deceleration period is supplied to the electric motor with priority over energy supplied from the power source during the first acceleration period.

5. The vibration test device according to claim 3, wherein:
the drive device further includes a capacitor provided between the power regenerative converter and the electric motor,
the controller repeats an energy cycle comprising the first acceleration period, the first deceleration period, the second acceleration period, and the second deceleration period in the drive period,
during the first acceleration period, at least energy accumulated in the capacitor during the second deceleration period of the previous energy cycle is supplied to the electric motor,
during the first deceleration period, energy regenerated from the electric motor is accumulated in the capacitor,
during the second acceleration period, at least energy accumulated in the capacitor during the first deceleration period in the current energy cycle is supplied to the electric motor, and
during the second deceleration period, energy regenerated from the electric motor is accumulated in the capacitor.

6. The vibration test device according to claim 2,
wherein the controller controls the drive device so that the electric motor repeats forward and reverse rotations at a required frequency of 3Hz or higher during the drive period.

7. The vibration test device according to claim 1, wherein:
the power source comprises an alternating current power source, and
the power regenerative converter comprises a bidirectional ACDC converter.

8. The vibration test device according to claim 1, wherein:
the power source comprises a direct current power source, and
the power regenerative converter comprises a bidirectional DCDC converter.

9. A tire test device, comprising:
an electric actuator; and
a controller that controls the electric actuator,
wherein the electric actuator includes:
an electric motor having a rotary shaft to be connected to a central axis of a tire; and
a drive device that is supplied with energy from a power source and controlled by the controller to supply driving electric power for causing the electric motor to generate fluctuating torque to the electric motor,
wherein the drive device includes a power regenerative converter that regenerates energy that is not consumed by acceleration of the electric motor, among energy regenerated from the electric motor when the controller controls the drive device to cause the electric motor to generate the fluctuating torque, to the power source.

10. A torsion test device, comprising:
an electric actuator; and
a controller that controls the electric actuator,
wherein the electric actuator includes:
an electric motor having a rotary shaft to be connected to a specimen; and
a drive device that is supplied with energy from a power source and controlled by the controller to supply driving electric power for causing the electric motor to generate fluctuating torque to the electric motor,
wherein the drive device includes a power regenerative converter that regenerates energy that is not consumed by acceleration of the electric motor, among energy regenerated from the electric motor when the controller controls the drive device to cause the electric motor to generate the fluctuating torque, to the power source.

11. A tensile and compression test device, comprising:
an electric actuator; and
a controller that controls the electric actuator,
wherein the electric actuator includes:
an electric motor of which rotation can be switched between forward and reverse rotations;
a motion converter that performs reciprocating linear motion in response to the forward and reverse rotations of the electric motor;
a movable part that receives the reciprocating linear motion of the motion converter and transmits compressive or tensile force to a specimen; and
a drive device that is supplied with energy from a power source and controlled by the controller to supply driving electric power for causing the motion converter to perform the reciprocating linear motion at desired amplitude and frequency to the electric motor,
wherein the drive device includes a power regenerative converter that regenerates energy that is not consumed by acceleration of the electric motor, among energy regenerated from the electric motor when the controller controls the drive device to cause the motion converter to perform the reciprocating linear motion at the desired amplitude and frequency.

12. A dynamic balancing multi-test device, comprising:
a spindle to which a tire is to be mounted;
an electric actuator that outputs unidirectional rotary motion;
a transmission mechanism that transmits the unidirectional rotary motion to the spindle; and
a controller that controls the electric actuator,
wherein the electric actuator includes:
an electric motor of which rotation can be switched between forward and reverse rotations;
a motion converter that converts the forward and reverse rotations of the electric motor into a unidirectional rotary motion; and
a drive device that is supplied with energy from a power source and controlled by the controller to supply driving electric power for causing the spindle to rotate at a predetermined speed to the electric motor,
wherein the drive device includes a power regenerative converter that regenerates energy that is not consumed by the acceleration of the electric motor, among energy regenerated from the electric motor when the controller controls the drive device to cause the spindle to rotate at the predetermined speed.

13. A uniformity test device, comprising:
a rotating drum that contacts a tire,
an electric actuator that causes the rotating drum to perform a unidirectional rotary motion; and
a controller that controls the electric actuator,
wherein the electric actuator includes:
an electric motor of which rotation can be switched between forward and reverse rotations;
a motion converter that converts the forward and reverse rotations of the electric motor into a unidirectional rotary motion; and
a drive device that is supplied with energy from a power source and controlled by the controller to supply driving electric power for causing the rotating drum to rotate at a predetermined speed to the electric motor,
wherein the drive device includes a power regenerative converter that regenerates energy that is not consumed by acceleration of the electric motor, among energy regenerated from the electric motor when the controller controls the drive device to cause the rotating drum to rotate at the predetermined speed, to the power source.

14. A balance measurement device, comprising:
an electric actuator that outputs unidirectional rotary motion:
a transmission mechanism that transmits the unidirectional rotary motion to a specimen; and
a controller that controls the electric actuator,
wherein the electric actuator includes:
an electric motor of which rotation can be switched between forward and reverse rotations;
a motion converter that converts the forward and reverse rotations of the electric motor into the unidirectional rotary motion; and
a drive device that is supplied with energy from a power source and controlled by the controller to supply driving electric power for causing the specimen to rotate at a predetermined speed to the electric motor,
wherein the drive device includes a power regenerative converter that regenerates energy that is not consumed by acceleration of the electric motor, among energy regenerated from the electric motor when the controller controls the drive unit to rotate the specimen at the predetermined speed, to the power source.

15. A collision simulation test device, comprising:
an attachment part to which a specimen is to be attached;
an electric actuator that outputs unidirectional rotary motion;
a transmission mechanism that converts the unidirectional rotary motion into linear motion and transmits the linear motion to the attachment part; and
a controller that controls the electric actuator,
wherein the electric actuator includes:
an electric motor of which rotation can be switched between forward and reverse rotations;
a motion converter that converts the forward and reverse rotations of the electric motor into unidirectional rotary motion; and
a drive device that is supplied with energy from a power source and controlled by the controller to supply driving electric power for providing a desired acceleration to the attachment part to the electric motor,
wherein the drive device includes a power regenerative converter that regenerates energy that is not consumed by acceleration of the electric motor, among energy regenerated from the electric motor when the controller controls the drive device to provide the desired acceleration to the attachment part, to the power source.

16. A hedge trimmer, comprising:
a blade;
an electric actuator that causes the blade to perform a reciprocating linear motion; and
a controller that controls the electric actuator,
wherein the electric actuator includes:
an electric motor of which rotation can be switched between forward and reverse rotations; and
a drive device that is supplied with energy from a power source and controlled by said controller to supply driving electric power for causing the blade to perform the reciprocating linear motion to the electric motor,
wherein the drive device includes a power regenerative converter that regenerates energy that is not consumed by acceleration of the electric motor, among energy regenerated from the electric motor when the controller controls the drive device to cause said blade to perform the reciprocating linear motion, to the power source.

17. An electric actuator, comprising:
at least one electric motor;
a drive device that supplies driving electric power to the electric motor; and
a controller that controls the drive device so that the electric motor repeats acceleration and deceleration,
wherein the drive device includes a first capacitor in which electric power regenerated from the electric motor is accumulated during a deceleration process of the electric motor.

18. The electric actuator according to claim 17, wherein:
the controller controls the drive device so that the electric motor repeats forward and reverse rotations at the required frequency in the drive section of the electric motor, and
the first capacitor accumulates electric power regenerated from the electric motor during the deceleration process of each of forward and reverse rotations of the electric motor.

19. The electric actuator according to claim 17
continuously repeats a forward rotation period and a reverse rotation period of the electric motor,
wherein, during the forward rotation period, the vibrating table moves in a forward direction,
wherein, during the reverse rotation period, the vibrating table moves in a reverse direction,
wherein the forward rotation period includes a first acceleration period of the electric motor that starts at the time when the vibrating table starts moving and a first deceleration period of the electric motor that ends when the vibrating table stops moving,
wherein the reverse rotation period includes a second acceleration period of the electric motor that starts at the time when the vibrating table starts moving and a second deceleration period of the electric motor that ends at the time when the vibrating table stops moving, and
wherein the controller:
accelerates the electric motor so that torque of the electric motor becomes positive during the first acceleration period;
decelerates the electric motor so that the torque of the electric motor becomes negative during the first deceleration period;
accelerates the electric motor so that the torque of the electric motor becomes positive during the second acceleration period; and
decelerates the electric motor so that the torque of the electric motor becomes negative during the second deceleration period.

20. The electric actuator according to claim 17,
wherein the drive device includes a power regenerative converter that regenerates electric power regenerated from the electric motor to the power source via the first capacitor.
